# EUROPÄISCHE PATENTSCHRIFT

(11) **EP 4 019 193 B1**
(45) Veröffentlichungstag und Bekanntmachung des Hinweises auf die Patenterteilung: **01.04.2026**
(21) Anmeldenummer: 21215031.2
(22) Anmeldetag: 16.12.2021
(51) Int. Cl.: B25F 5/00, B23B 49/00, B23Q 17/00

(54) **ELEKTRONIKMODUL UND EINSATZWERKZEUGSYSTEM MIT EINEM DERARTIGEN ELEKTRONIKMODUL**
ELECTRONIC MODULE AND INSERT TOOL SYSTEM COMPRISING SUCH AN ELECTRONIC MODULE
MODULE ÉLECTRONIQUE ET SYSTÈME D'OUTIL D'INSERTION DOTÉ D'UN TEL MODULE ÉLECTRONIQUE

(30) Priorität: 22.12.2020 DE 102020216454
(43) Veröffentlichungstag der Anmeldung: 29.06.2022
(73) Patentinhaber: Robert Bosch GmbH, 70442 Stuttgart (DE)
(72) Erfinder: Scherrer, Martin, 4528 Zuchwil (CH); Delfini, Stefano, 2544 Bettlach (CH); Loeblein, Joachim, 71334 Waiblingen (DE); Ramezanian, Houman, 5408 Enntbaden (CH)

(56) Entgegenhaltungen:
- CN-U- 204 963 887
- DE-A1- 102017 205 334
- US-A1- 2004 136 795
- US-A1- 2012 328 381
- US-A1- 2015 165 580
- US-B2- 10 739 127
- US-B2- 8 517 642

## Beschreibung

### Stand der Technik

Aus der CN 204963887 U ist bereits ein Elektronikmodul für ein Einsatzwerkzeug mit zumindest einer Elektronikvorrichtung zu einem Erfassen von einsatzwerkzeugspezifischen Kenngrößen, mit zumindest einer Haltevorrichtung zu einer lösbaren Halterung der Elektronikvorrichtung an dem Einsatzwerkzeug, wobei die Haltevorrichtung zumindest eine Einsatzwerkzeugschnittstelle umfasst, die zumindest eine Kontaktfläche aufweist, die in einem an dem Einsatzwerkzeug angeordneten Zustand der Haltevorrichtung in Kontakt mit dem Einsatzwerkzeug ist, und mit zumindest einer Dämpfungseinheit zu einem Dämpfen von auf die Elektronikvorrichtung einwirkenden Schwingungen bekannt. Ein Elektronikmodul gemäß dem Oberbegriff des Anspruchs 1 ist bereits aus der DE 10 2017 205334 A1 bekannt.

### Offenbarung der Erfindung

Die Erfindung geht aus von einem Elektronikmodul für ein Einsatzwerkzeug, insbesondere einem Bohrer oder einem Meißel, mit zumindest einer Elektronikvorrichtung zu einem Verarbeiten und/oder Erfassen von einsatzwerkzeugspezifischen Kenngrößen, mit zumindest einer Haltevorrichtung zu einer lösbaren Halterung der Elektronikvorrichtung an dem Einsatzwerkzeug, wobei die Haltevorrichtung zumindest eine Einsatzwerkzeugschnittstelle umfasst, die zumindest eine Kontaktfläche aufweist, die in einem an dem Einsatzwerkzeug angeordneten Zustand der Haltevorrichtung in, insbesondere direktem, Kontakt mit dem Einsatzwerkzeug ist, und mit zumindest einer Dämpfungseinheit zu einem Dämpfen von auf die Elektronikvorrichtung einwirkenden Schwingungen.

Es wird vorgeschlagen, dass die Dämpfungseinheit zumindest teilweise die Einsatzwerkzeugschnittstelle bildet. Vorzugsweise ist die Dämpfungseinheit dazu vorgesehen, von dem Einsatzwerkzeug auf ein Gehäuse der Haltevorrichtung, in dem die Elektronikvorrichtung angeordnet ist, einwirkende Schwingungen zu dämpfen. Unter "vorgesehen" soll insbesondere speziell eingerichtet, speziell programmiert, speziell ausgelegt und/oder speziell ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt. Die Dämpfungseinheit ist bevorzugt dazu vorgesehen, eine Übertragung von am Einsatzwerkzeug auftretenden Beschleunigungen auf das Gehäuse, insbesondere die Elektronikvorrichtung, zu dämpfen, vorzugsweise um zumindest 50%, bevorzugt um zumindest 75%, besonders bevorzugt um zumindest 90% und ganz besonders bevorzugt um zumindest 99%. Vorzugsweise ist die Dämpfungseinheit derart ausgebildet, dass ein Dämpfen von auf die Elektronikvorrichtung einwirkenden Schwingungen erfolgt, wobei gleichzeitig einsatzwerkzeugspezifische Kenngrößen mittels der Elektronikvorrichtung erfassbar sind. Ferner ist die Dämpfungseinheit insbesondere dazu vorgesehen, einer Übertragung von Wärme von dem Einsatzwerkzeug auf das Gehäuse, insbesondere die Elektronikvorrichtung, entgegenzuwirken. Bevorzugt ist die Dämpfungseinheit dazu vorgesehen, eine Relativbewegung, insbesondere zumindest eine axiale Relativbewegung, der Elektronikvorrichtung zu dem Einsatzwerkzeug in einem an dem Einsatzwerkzeug angeordneten Zustand der Haltevorrichtung zu ermöglichen. Insbesondere ist die Dämpfungseinheit dazu vorgesehen, eine Relativbewegung, bevorzugt zumindest eine axiale Relativbewegung, des Gehäuses der Haltevorrichtung zu dem Einsatzwerkzeug in einem an dem Einsatzwerkzeug angeordneten Zustand der Haltevorrichtung zu ermöglichen. Bevorzugt ist die Dämpfungseinheit dazu vorgesehen, eine Relativbewegung, insbesondere zumindest eine axiale Relativbewegung, des Gehäuses, insbesondere der Elektronikvorrichtung, zu dem Einsatzwerkzeug in einem an dem Einsatzwerkzeug angeordneten Zustand zu ermöglichen.

Insbesondere ist die Kontaktfläche der Einsatzwerkzeugschnittstelle, die in einem an dem Einsatzwerkzeug angeordneten Zustand der Haltevorrichtung in direktem Kontakt mit dem Einsatzwerkzeug ist, zumindest teilweise von der Dämpfungseinheit gebildet. Bevorzugt ist die Kontaktfläche der Einsatzwerkzeugschnittstelle, die in einem an dem Einsatzwerkzeug angeordneten Zustand der Haltevorrichtung in direktem Kontakt mit dem Einsatzwerkzeug ist, zumindest im Wesentlichen vollständig durch die Dämpfungseinheit gebildet. Unter "zumindest im Wesentlichen vollständig" sollen insbesondere zumindest 50 %, bevorzugt zumindest 75 % und besonders bevorzugt zumindest 90 % einer Gesamtfläche, eines Gesamtvolumens und/oder einer Gesamtmasse eines Objekts, insbesondere der Kontaktfläche, verstanden werden. Die Kontaktfläche liegt insbesondere in einem an dem Einsatzwerkzeug angeordneten Zustand der Haltevorrichtung an einer Außenfläche des Einsatzwerkzeugs an. Vorzugsweise umfasst die Dämpfungseinheit zumindest ein Dämpfungselement. Das Dämpfungselement ist vorzugsweise als Elastomer, Feder, Textil oder dergleichen ausgebildet. Beispielsweise ist das Dämpfungselement würfelartig, kreisringsegmentartig, plattenförmig oder dergleichen ausgebildet. Das Dämpfungselement bildet bevorzugt die Kontaktfläche der Einsatzwerkzeugschnittstelle. Es ist auch denkbar, dass die Dämpfungseinheit zumindest zwei Dämpfungselemente oder eine Vielzahl von Dämpfungselementen umfasst. Es ist denkbar, dass die Kontaktfläche der Einsatzwerkzeugschnittstelle von einem der Dämpfungselemente, von mehreren oder von sämtlichen Dämpfungselementen gebildet ist. Vorzugsweise sind die Dämpfungselemente identisch zueinander ausgebildet. Es ist auch denkbar, dass die Dämpfungselemente verschieden voneinander ausgebildet sind. Es ist denkbar, dass die Dämpfungselemente beabstandet, zumindest in einem Betriebszustand, beabstandet zueinander angeordnet sind. Das zumindest eine Dämpfungselement ist insbesondere lösbar mit der Haltevorrichtung, insbesondere dem Gehäuse der Haltevorrichtung, verbunden. Unter "lösbar" soll in diesem Zusammenhang insbesondere "zerstörungsfrei trennbar" verstanden werden. Vorzugsweise ist das zumindest eine Dämpfungselement zumindest kraftschlüssig oder formschlüssig mit dem Gehäuse verbunden. Es ist denkbar, dass zumindest das eine Dämpfungselement an der Haltevorrichtung befestigbar ist, beispielsweise über eine Klemmverbindung, eine Rastverbindung, eine Klettverbindung oder dergleichen. Alternativ ist auch denkbar, dass das zumindest eine Dämpfungselement einstückig mit der Haltevorrichtung, insbesondere dem Gehäuse, ausgebildet ist. Unter "einstückig" soll insbesondere zumindest stoffschlüssig verbunden verstanden werden, beispielsweise durch einen Schweißprozess, einen Klebeprozess, einen Anspritzprozess und/oder einen anderen, dem Fachmann als sinnvoll erscheinenden Prozess, und/oder vorteilhaft in einem Stück geformt verstanden werden, wie beispielsweise durch eine Herstellung aus einem Guss und/oder durch eine Herstellung in einem Ein- oder Mehrkomponentenspritzverfahren und vorteilhaft aus einem einzelnen Rohling. Mittels der Haltevorrichtung ist die Elektronikvorrichtung vorzugsweise zerstörungsfrei lösbar an dem Einsatzwerkzeug befestigbar. Vorzugsweise ist die Haltevorrichtung, die zu einer lösbaren Halterung der Elektronikvorrichtung an dem Einsatzwerkzeug vorgesehen ist, zu einem mehrmaligen Lösen/Befestigen der Elektronikvorrichtung und/oder des Gehäuses von/an dem Einsatzwerkzeug und/oder an einem anderen Einsatzwerkzeug eingerichtet.

Insbesondere ist die Dämpfungseinheit, vorzugsweise zumindest das eine Dämpfungselement, mittels des Gehäuses in einem an dem Einsatzwerkzeug angeordneten Zustand der Haltevorrichtung, zwischen dem Gehäuse und dem Einsatzwerkzeug einspannbar, verklemmbar und/oder fixierbar. Vorzugsweise ist die Haltevorrichtung dazu vorgesehen, die Elektronikvorrichtung auf der Außenfläche des Einsatzwerkzeugs lösbar zu befestigen. Die Haltevorrichtung umfasst insbesondere zumindest eine Halteeinheit, die zu einem Befestigen und/oder Lösen des Einsatzwerkzeugs an/von der Einsatzwerkzeugschnittstelle in einem durch die Dämpfungseinheit zumindest teilweise begrenzten Aufnahmebereich für das Einsatzwerkzeug vorgesehen ist. Die Halteeinheit ist beispielsweise als Klemmverbindung oder als Rastverbindung oder dergleichen ausgebildet.

Vorteilhaft kann durch das erfindungsgemäße Elektronikmodul eine besonders robuste und einfach montierbare Nachrüstlösung für eine Vielzahl unterschiedlicher handelsüblicher Einsatzwerkzeuge bereitgestellt werden. Vorteilhaft kann ein Elektronikmodul besonders sicher an einem Einsatzwerkzeug befestigt werden. Es kann vorteilhaft ein besonders effizienter Schutz der Haltevorrichtung und/oder der Elektronikvorrichtung vor Stößen erreicht werden. Vorteilhaft kann durch die Dämpfungseinheit eine Relativbewegung des Gehäuses zu dem Einsatzwerkzeug ermöglicht werden. Vorteilhaft kann durch die Dämpfungseinheit einer Wärmeübertagung von dem Einsatzwerkzeug auf die Elektronikvorrichtung entgegengewirkt werden.

Weiterhin wird vorgeschlagen, dass die Dämpfungseinheit zumindest ein, insbesondere das zuvor bereits genannte, Dämpfungselement aufweist, das zumindest eine kreisringsegmentartige Ausgestaltung aufweist und die Kontaktfläche der Einsatzwerkzeugschnittstelle bildet. Insbesondere entspricht eine Kontur der Kontaktfläche einer Kontur der Außenfläche des Einsatzwerkzeugs, an der die Haltevorrichtung, insbesondere die Kontaktfläche des zumindest einen Dämpfungselements, in einem an dem Einsatzwerkzeug angeordneten Zustand der Haltevorrichtung anliegt. Insbesondere ist die durch das zumindest eine Dämpfungselement gebildete Kontaktfläche gekrümmt. Vorzugsweise entspricht eine Krümmung der Kontaktfläche einer Krümmung der Außenfläche des Einsatzwerkzeugs. Es ist auch denkbar, dass die durch das zumindest eine Dämpfungselement gebildete Kontaktfläche eben, insbesondere krümmungsfrei, verläuft, insbesondere bei einem Einsatzwerk, das in einem Bereich, an dem die Elektronikvorrichtung anordenbar ist, einen polygonalen Querschnitt aufweist. Beispielsweise weist das zumindest eine Dämpfungselement einen Querschnitt auf, der einem ganzen Kreisring oder einem Kreisringsegment entspricht. Vorzugsweise ist das Dämpfungselement als ein O-Ring, als ein O-Ring-Segment, als ein Hohlzylinder, als ein Hohlzylinderteil, insbesondere eine Hohlzylinderhälfte, oder dergleichen ausgebildet. Es ist denkbar, dass zumindest zwei Dämpfungselemente der Dämpfungseinheit gemeinsam in einem an dem Einsatzwerkzeug angeordneten Zustand der Haltevorrichtung einen Querschnitt aufweisen, der einem ganzen Kreisring entspricht. Insbesondere ist denkbar, dass zumindest zwei Dämpfungselemente der Dämpfungseinheit gemeinsam in einem an dem Einsatzwerkzeug angeordneten Zustand der Haltevorrichtung einen geschlossenen O-Ring oder einen Hohlzylinder bilden. Bevorzugt ist zumindest das, insbesondere kreissegmentartig ausgebildete, Dämpfungselement aus Elastomer, insbesondere aus Gummi, oder aus einem Textilmaterial gebildet. Vorteilhaft kann eine besonders effiziente und gleichmäßige Dämpfung der Elektronikvorrichtung erreicht werden. Vorteilhaft kann eine besonders zuverlässige Befestigung des Elektronikmoduls an einem Einsatzwerkzeug erreicht werden.

Des Weiteren wird vorgeschlagen, dass die Haltevorrichtung ein, insbesondere das zuvor bereits genannte, Gehäuse umfasst, in dem die Elektronikvorrichtung angeordnet ist, wobei die Dämpfungseinheit, insbesondere zumindest ein, insbesondere das zuvor bereits genannte, die Kontaktfläche der Einsatzwerkzeugschnittstelle bildende Dämpfungselement der Dämpfungseinheit, in einem an dem Einsatzwerkzeug angeordneten Zustand der Haltevorrichtung an einer dem Einsatzwerkzeug zugewandten Seite des Gehäuses angeordnet ist. Das Gehäuse weist vorzugsweise einen Querschnitt auf, der zumindest in einem an dem Einsatzwerkzeug angeordneten Zustand der Haltevorrichtung, einem Kreisringsegment, einem Kreisring oder dergleichen entspricht. Das Gehäuse weist beispielsweise eine zylinderförmige, insbesondere kreissegmentartige, eine kappenförmige Ausgestaltung oder dergleichen auf. Es ist auch denkbar, dass das Gehäuse eine kugelförmige Ausgestaltung aufweist. Besonders bevorzugt weist das Gehäuse zumindest eine innere Gehäuseaußenfläche auf, die in einem an dem Einsatzwerkzeug angeordneten Zustand der Haltevorrichtung an der dem Einsatzwerkzeug zugewandten Seite des Gehäuses angeordnet ist. Vorzugsweise liegt die Dämpfungseinheit, insbesondere zumindest das eine Dämpfungselement, zumindest in einem Betriebszustand an der inneren Gehäuseaußenfläche an. Das zumindest eine Dämpfungselement weist insbesondere zumindest eine Gehäusekontaktfläche auf, an der das Gehäuse, insbesondere die innere Gehäuseaußenfläche, zumindest in einem Betriebszustand anliegt. Eine Kontur der Gehäusekontaktfläche entspricht vorzugsweise einer Kontur der inneren Gehäuseaußenfläche, an der die Gehäusekontaktfläche zumindest in einem Betriebszustand anliegt. Es ist denkbar, dass die Gehäusekontaktfläche und/oder die innere Gehäuseaußenfläche zumindest teilweise eine runde und/oder eine polygonale Kontur aufweisen/aufweist. Insbesondere weist das Gehäuse eine äußere Gehäuseaußenfläche auf, die an einer Seite des Gehäuses angeordnet ist, die der Seite des Gehäuses, an der die innere Gehäuseaußenfläche angeordnet ist, abgewandt ist. Eine Kontur der äußeren Gehäuseaußenfläche ist beispielsweise zumindest teilweise rund, oval und/oder polygonal. Es ist denkbar, dass die äußere Gehäuseaußenfläche eine rechteckige, insbesondere quadratische, Kontur aufweist. Es kann vorteilhaft eine Dämpfung des Gehäuses und damit der Elektronikvorrichtung erreicht werden. Vorteilhaft kann durch die Möglichkeit einer besonders passgenauen Verbindung des Gehäuses mit der Dämpfungseinheit ein besonders effizienter Schutz der Elektronikvorrichtung erreicht werden. Es kann vorteilhaft eine besonders zuverlässige Verbindung der Haltevorrichtung an dem Einsatzwerkzeug erreicht werden.

Ferner wird vorgeschlagen, dass die Einsatzwerkzeugschnittstelle, insbesondere die Dämpfungseinheit, einen, insbesondere den zuvor bereits genannten, Aufnahmebereich für das Einsatzwerkzeug zumindest teilweise umgibt, wobei die Haltevorrichtung und die Dämpfungseinheit zumindest in einem Betriebszustand einen gemeinsamen Massenschwerpunkt aufweisen und/oder eine Mittelachse des Aufnahmebereichs einen Massenschwerpunkt der Haltevorrichtung und der Dämpfungseinheit schneidet, zumindest betrachtet in einer zur Mittelachse senkrecht verlaufenden Ebene. Unter einem "Massenschwerpunkt" eines Körpers/mehrerer Körper soll insbesondere das mit der Masse gewichtete Mittel der Positionen seiner/derer Massepunkte verstanden werden. Die Haltevorrichtung und die Dämpfungseinheit weisen vorzugsweise in einem Betriebszustand zumindest einen gemeinsamen Massenschwerpunkt auf und/oder die Mittelachse des Aufnahmebereichs schneidet einen Massenschwerpunkt der Haltevorrichtung und einen Massenschwerpunkt der Dämpfungseinheit, zumindest betrachtet in einer zu der Mittelachse senkrechten verlaufenden Ebene, um einen Unwuchtsausgleich bei einem in einem Betriebszustand rotierend und/oder schlagend angetriebenen Einsatzwerkzeug zu erreichen. Es ist denkbar, dass der Aufnahmebereich vollständig von der Dämpfungseinheit umgeben ist, insbesondere zumindest betrachtet entlang einer Umfangsrichtung des Aufnahmebereichs. Die Umfangsrichtung des Aufnahmebereichs verläuft insbesondere in einer Ebene, die senkrecht zu der Mittelachse des Aufnahmebereichs verläuft. Es ist auch denkbar, dass der Aufnahmebereich teilweise von der Dämpfungseinheit umgeben ist, insbesondere zumindest betrachtet entlang der Umfangsrichtung des Aufnahmebereichs. Vorzugsweise ist der Aufnahmebereich, zumindest entlang der Umfangsrichtung des Aufnahmebereichs, zumindest teilweise durch die Dämpfungseinheit begrenzt. Besonders bevorzugt ist der Aufnahmebereich, zumindest entlang der Umfangsrichtung des Aufnahmebereichs, vollständig durch die Dämpfungseinheit begrenzt. Ferner ist denkbar, die Dämpfungseinheit, insbesondere die Kontaktfläche, und/oder die Haltevorrichtung, insbesondere die innere Gehäuseaußenfläche, den Aufnahmebereich vollständig umgeben und/oder begrenzen, zumindest betrachtet entlang der Umfangsrichtung des Aufnahmebereichs. Vorzugsweise sind die Dämpfungseinheit und/oder die Haltevorrichtung symmetrisch um die Mittelachse des Aufnahmebereichs angeordnet, insbesondere zumindest hinsichtlich einer Gewichtsverteilung und/oder einer räumlichen Ausdehnung. Es ist denkbar, dass der jeweilige Massenschwerpunkt der Dämpfungseinheit und der Haltevorrichtung jeweils versetzt zu der Mittelachse des Aufnahmebereichs angeordnet ist, zumindest betrachtet in der zur Mittelachse senkrecht verlaufenden Ebene, wobei die Massenschwerpunkte der Haltevorrichtung und der Dämpfungseinheit zusammengenommen auf der Mittelachse des Aufnahmebereichs liegen. Vorteilhaft kann ein Elektronikmodul bereitgestellt werden, das eine besonders geringe Unwucht auf das Einsatzwerkzeug ausübt. Es kann vorteilhaft eine besonders effiziente und gleichmäßige Dämpfung der Elektronikvorrichtung bei gleichzeitig besonders geringem Einfluss auf einen Betrieb des Einsatzwerkzeugs erreicht werden.

Erfindungsgemäß wird vorgeschlagen, dass die Haltevorrichtung zumindest eine, insbesondere die zuvor bereits genannte, Halteeinheit umfasst, die zum werkzeuglosen Befestigen und/oder Lösen des Einsatzwerkzeugs an/von der Einsatzwerkzeugschnittstelle in einem, insbesondere dem zuvor bereits genannten, durch die Dämpfungseinheit zumindest teilweise begrenzten Aufnahmebereich für das Einsatzwerkzeug vorgesehen ist. Es ist denkbar, dass die Halteeinheit als Bajonettverschluss, als Ratschenverschluss, als Klemmkappe, als Bügelverschluss oder dergleichen ausgebildet ist. Vorzugsweise ist das Einsatzwerkzeug an/von der Einsatzwerkzeugschnittstelle in dem durch die Dämpfungseinheit zumindest teilweise begrenzten Aufnahmebereich frei von einer Werkzeugnutzung befestigbar/lösbar. Die Halteeinheit ist dazu eingerichtet, zu einem Lösen und/oder Befestigen von Hand, frei von einem zusätzlichen Werkzeug, betätigt zu werden. Insbesondere ist das Einsatzwerkzeug mittels der Halteeinheit von Hand an/von der Einsatzwerkzeugschnittstelle in dem Aufnahmebereich für das Einsatzwerkzeug befestigbar/lösbar. Bevorzugt sind mittels der Halteeinheit und/oder der Dämpfungseinheit Einsatzwerkzeuge unterschiedlicher Größe, insbesondere unterschiedlicher Durchmesser, an der Einsatzwerkzeugschnittstelle in dem Aufnahmebereich befestigbar. Vorzugsweise ist zumindest über eine Materialdicke des zumindest einen Dämpfungselements, welches insbesondere die Kontaktfläche zumindest teilweise bildet, ein maximaler Durchmesser des Aufnahmebereichs variierbar. Zusätzlich oder alternativ ist denkbar, dass die Halteeinheit zur Befestigung von Einsatzwerkzeugen unterschiedlicher Größen, insbesondere unterschiedlicher Durchmesser, verstellbar ausgebildet ist. Bevorzugt ist die Halteeinheit derart verstellbar ausgebildet, dass ein maximaler Durchmesser des Aufnahmebereichs für das Einsatzwerkzeug variierbar ist, insbesondere zumindest in einer als Ratschenverschluss oder Bügelverschluss ausgebildeten Ausführung der Halteeinheit. Besonders bevorzugt ist eine Haltekraft des Einsatzwerkzeugs an der Einsatzwerkzeugschnittstelle in dem Aufnahmebereich über die Halteeinheit und/oder die Dämpfungseinheit einstellbar. Die Haltekraft des Einsatzwerkzeugs an der Einsatzwerkzeugschnittstelle in dem Aufnahmebereich ist vorzugsweise zumindest über eine Materialwahl, insbesondere Elastizität und/oder Härte, eine Materialdicke oder dergleichen des zumindest einen Dämpfungselements anpassbar. Es kann vorteilhaft besonders komfortabel ein gedämpftes Elektronikmodul an einem Einsatzwerkzeug angeordnet werden. Vorteilhaft kann ein gedämpftes Elektronikmodul besonders komfortabel an unterschiedlichen Einsatzwerkzeugen befestigt und/oder verwendet werden.

Weiterhin wird vorgeschlagen, dass die Haltevorrichtung zumindest eine als Bajonettverschluss ausgebildete Halteeinheit umfasst, die zu einem lösbaren Befestigen des Einsatzwerkzeugs an der Einsatzwerkzeugschnittstelle in einem, insbesondere dem zuvor bereits genannten, durch die Dämpfungseinheit zumindest teilweise begrenzten Aufnahmebereich für das Einsatzwerkzeug vorgesehen ist. Vorzugsweise ist zumindest ein Teil des Bajonettverschlusses an dem Gehäuse angeordnet. Es ist denkbar, dass der Bajonettverschluss zumindest teilweise einstückig mit dem Gehäuse ausgebildet ist. Der Bajonettverschluss ist insbesondere dazu vorgesehen, das Gehäuse zumindest axial mit der Dämpfungseinheit zu verspannen. Bevorzugt ist die Dämpfungseinheit in einem geschlossenen Zustand des Bajonettverschlusses, insbesondere auch in einem von dem Einsatzwerkzeug gelösten Zustand der Haltevorrichtung, verliersicher an und/oder in der Haltevorrichtung angeordnet. Es kann vorteilhaft eine besonders sichere axiale Fixierung des Elektronikmoduls an dem Einsatzwerkzeug erreicht werden. Des Weiteren wird vorgeschlagen, dass der Bajonettverschluss zumindest einen metallenen Verschlussring umfasst. Der metallene Verschlussring weist insbesondere zumindest an/auf einer Ringaußenfläche zumindest ein Formschlusselement, bevorzugt zumindest zwei Formschlusselemente, besonders bevorzugt zumindest vier Formschlusselemente auf. Die Ringaußenfläche verläuft insbesondere zumindest im Wesentlichen parallel zu der inneren Gehäuseaußenfläche, zu der äußeren Gehäuseaußenfläche und/oder zu der Mittelachse des Aufnahmebereichs, vorzugsweise zumindest in einem Betriebszustand. Vorzugsweise ist das zumindest eine Formschlusselement des Verschlussrings als Vorsprung oder dergleichen ausgebildet. Der Bajonettverschluss umfasst bevorzugt zumindest ein weiteres Formschlusselement, vorzugsweise zumindest zwei weitere Formschlusselemente, besonders bevorzugt zumindest vier weitere Formschlusselemente, die insbesondere an dem Gehäuse angeordnet sind, besonders bevorzugt einstückig mit dem Gehäuse ausgebildet sind. Das zumindest eine weitere Formschlusselement ist vorzugsweise als eine Vorsprungsaufnahme ausgebildet. Es ist auch denkbar, dass das zumindest eine Formschlusselement als Vorsprungsaufnahme und das zumindest eine weitere Formschlusselement als Vorsprung ausgebildet ist. Das zumindest eine Formschlusselement des Verschlussrings ist insbesondere dazu vorgesehen, zu einer Befestigung des Verschlussrings an dem Gehäuse, mit dem zumindest einen weiteren Formschlusselement zusammenzuwirken. Das zumindest eine weitere als Vorsprungsaufnahme ausgebildete Formschlusselement ist insbesondere dazu vorgesehen, das zumindest eine als Vorsprung ausgebildete Formschlusselement zu einer Befestigung des Verschlussrings an dem Gehäuse aufzunehmen. Insbesondere ist der Bajonettverschluss bei einem entsprechenden axialen Abstand zwischen dem Gehäuse und dem Verschlussring, durch eine Drehung des Verschlussrings relativ zu dem Gehäuse verschließbar, insbesondere durch eine Drehung um eine Längsachse des Einsatzwerkzeugs. Es ist denkbar, dass das Gehäuse zumindest teilweise aus einem Kunststoff und/oder zumindest teilweise aus einem Metall gebildet ist. Besonders bevorzugt ist das Gehäuse zumindest im Wesentlichen vollständig aus einem Kunststoff gebildet. Alternativ ist auch denkbar, dass der Verschlussring aus einem Kunststoff oder dergleichen gebildet ist. Es kann vorteilhaft eine besonders zuverlässige und gleichzeitig die Elektronikvorrichtung schonende Befestigung eines Elektronikmoduls an einem Einsatzwerkzeug realisiert werden.

Außerdem wird vorgeschlagen, dass die Dämpfungseinheit zumindest ein als Schrumpfschlauch ausgebildetes, insbesondere das zuvor bereits genannte, Dämpfungselement umfasst. Insbesondere ist das als Schrumpfschlauch ausgebildete Dämpfungselement dazu vorgesehen, an dem Einsatzwerkzeug, insbesondere an der Außenfläche des Einsatzwerkzeugs, angebracht zu werden. Vorzugsweise ist das als Schrumpfschlauch ausgebildete Dämpfungselement dazu vorgesehen, mittels eines heißen Luftstroms an dem Einsatzwerkzeug, insbesondere an der Außenfläche des Einsatzwerkzeugs, angebracht zu werden. Das als Schrumpfschlauch ausgebildete Dämpfungselement umfasst beispielsweise eine Klebeschicht, die insbesondere dazu vorgesehen ist, bei einer Befestigung des Dämpfungselements an dem Einsatzwerkzeug aufgeschmolzen zu werden. Die Klebeschicht ist vorzugsweise mittels eines heißen Luftstroms und/oder durch eine zuvor erzeugte Erwärmung des Einsatzwerkzeugs aufschmilzbar. Vorzugsweise ist an einer äußeren Seite des als Schrumpfschlauch ausgebildeten Dämpfungselements, an der insbesondere die Gehäusekontaktfläche angeordnet ist, eine Erhebung, insbesondere ein Randsteg, ausgebildet. Die Erhebung erstreckt sich vorzugsweise zumindest teilweise, beispielsweise abschnittsweise, besonders bevorzugt vollständig, entlang einer Umfangsrichtung des Dämpfungselements. Die Umfangsrichtung des als Schrumpfschlauch ausgebildeten Dämpfungselements verläuft insbesondere in einer zu der Mittelachse des Aufnahmebereichs senkrecht verlaufenden Ebene. Die Erhebung ist insbesondere dazu vorgesehen, zumindest eine Axialbewegung des Gehäuses relativ zu dem als Schrumpfschlauch ausgebildeten Dämpfungselement und/oder dem Einsatzwerkzeug zumindest in einem Betriebszustand zumindest teilweise zu begrenzen und/oder zu dämpfen. Es kann vorteilhaft eine besonders sichere Halterung des Elektronikmoduls an einem Einsatzwerkzeug realisiert werden, wobei gleichzeitig ein besonders zuverlässiger Schutz, insbesondere eine Dämpfung, der Elektronikvorrichtung ermöglicht wird.

Weiterhin wird vorgeschlagen, dass die Dämpfungseinheit zumindest ein als O-Ring ausgebildetes, insbesondere weiteres, Dämpfungselement umfasst. Vorzugsweise umfasst die Dämpfungseinheit zumindest bei einer als Bajonettverschluss ausgebildeten Halteeinheit das als Schrumpfschlauch ausgebildete Dämpfungselement und das als O-Ring ausgebildete weitere Dämpfungselement. Das als O-Ring ausgebildete Dämpfungselement umschließt bevorzugt zumindest in einem Betriebszustand das als Schrumpfschlauch ausgebildete Dämpfungselement, insbesondere zumindest betrachtet entlang der Umfangsrichtung des Dämpfungselements. Das als Schrumpfschlauch ausgebildete Dämpfungselement und/oder das als O-Ring ausgebildete Dämpfungselement sind/ist vorzugsweise zumindest in einem Betriebszustand, insbesondere in einem geschlossenen Zustand des Bajonettverschlusses, auf einer dem Aufnahmebereich zugewandten Seite des Gehäuses angeordnet, besonders bevorzugt verliersicher angeordnet. Vorzugsweise ist das als O-Ring ausgebildete Dämpfungselement zumindest in einem Betriebszustand zwischen dem als Schrumpfschlauch ausgebildeten Dämpfungselement und dem Gehäuse angeordnet. Es ist denkbar, dass das als Schrumpfschlauch ausgebildete Dämpfungselement und/oder das als O-Ring ausgebildete Dämpfungselement zumindest teilweise die Kontaktfläche bilden/bildet. Ein maximaler Durchmesser eines durch die innere Gehäuseaußenfläche gebildeten Bereichs ist zumindest an einer Stelle kleiner als ein maximaler Außendurchmesser des als O-Ring ausgebildeten Dämpfungselements. Das als O-Ring ausgebildete Dämpfungselement ist vorzugsweise dazu vorgesehen, zumindest eine Axialbewegung des Gehäuses relativ zu dem als O-Ring ausgebildeten Dämpfungselement und/oder dem Einsatzwerkzeug zumindest in einem Betriebszustand zumindest teilweise zu begrenzen und/oder zu dämpfen. Das als O-Ring ausgebildete Dämpfungselement ist bevorzugt zu einer Dämpfung und/oder Begrenzung einer Axialbewegung des Gehäuses relativ zu dem Einsatzwerkzeug in zumindest einem Betriebszustand dazu vorgesehen, mit dem als Schrumpfschlauch ausgebildeten Dämpfungselement, insbesondere der Erhebung, und/oder einer Gehäuseaußenfläche des Gehäuses zusammenzuwirken. Es kann vorteilhaft eine besonders effektive Dämpfung der Elektronikvorrichtung erreicht werden.

Ferner wird vorgeschlagen, dass die Dämpfungseinheit derart die Einsatzwerkzeugschnittstelle ausbildet, dass die Dämpfungseinheit in einem an der Einsatzwerkzeugschnittstelle angeordneten Zustand des Einsatzwerkzeugs zumindest zur Dämpfung von auf die Elektronikvorrichtung wirkenden Schwingungen vorgesehen ist, die durch entlang einer, insbesondere der zuvor bereits genannten, Längsachse, insbesondere Rotationsachse, des Einsatzwerkzeugs wirkende Stöße oder Schläge des Einsatzwerkzeugs hervorrufbar sind. Vorzugsweise ist die Elektronikvorrichtung und/oder das Gehäuse über die Dämpfungseinheit und die Halteeinheit derart an dem Einsatzwerkzeug befestigbar, dass, vorzugsweise bei einem Auftreten von Stößen und/oder Schlägen auf das Einsatzwerkzeug, die Haltevorrichtung, insbesondere das Gehäuse, und/oder die Elektronikvorrichtung relativ zu dem Einsatzwerkzeug zumindest axial, insbesondere parallel zu der Längsachse und/oder der Mittelachse, bewegbar sind/ist. Insbesondere ist die axiale Bewegbarkeit der Haltevorrichtung, insbesondere des Gehäuses, und/oder der Elektronikvorrichtung relativ zu dem Einsatzwerkzeug in einem an dem Einsatzwerkzeug angeordneten Zustand der Haltevorrichtung über die durch die Dämpfungseinheit und/oder die Halteeinheit erzeugbare Haltekraft anpassbar. Vorteilhaft kann zumindest eine axiale Relativbewegung der Elektronikvorrichtung, insbesondere des Gehäuses und/oder der Haltevorrichtung, relativ zu dem Einsatzwerkzeug zumindest teilweise ermöglicht werden, sodass einer Beschädigung des Elektronikmoduls durch Stöße am Einsatzwerkzeug entgegengewirkt werden kann.

Außerdem wird ein Einsatzwerkzeugsystem mit zumindest einem, insbesondere dem zuvor bereits genannten, Einsatzwerkzeug und mit zumindest dem erfindungsgemäßen Elektronikmodul vorgeschlagen. Vorzugsweise ist das Einsatzwerkzeug für eine Handwerkzeugmaschine vorgesehen. Es ist denkbar, dass das Einsatzwerkzeug durch eine Befestigung des Elektronikmoduls an dem Einsatzwerkzeug in ein Internet-of-Things-Netzwerk einbindbar ist. Die Handwerkzeugmaschine ist beispielsweise als Bohrmaschine, als Bohrhammer, als Schlaghammer, als Meißelhammer oder dergleichen ausgebildet. Vorzugsweise weist die Handwerkzeugmaschine zumindest eine Einsatzwerkzeugaufnahme auf, in oder an der das Einsatzwerkzeug befestigbar ist. Es ist denkbar, dass das Einsatzwerkzeug durch die Handwerkzeugmaschine antreibbar ist. Es ist denkbar, dass die Handwerkzeugmaschine dazu eingerichtet ist, das Einsatzwerkzeug zu einer Rotationsbewegung, insbesondere um eine Längsachse des Einsatzwerkzeugs, anzutreiben. Zusätzlich oder alternativ ist denkbar, dass die Handwerkzeugmaschine ein Schlagwerk umfasst, um das Einsatzwerkzeug in einem Schlagbetrieb anzutreiben. Ein durch das Schlagwerk erzeugter Schlag auf das Einsatzwerkzeug erfolgt bevorzugt entlang der Längsachse des Einsatzwerkzeugs. Bevorzugt weist das Einsatzwerkzeug einen runden Querschnitt auf. Es ist jedoch auch denkbar, dass das Einsatzwerkzeug einen polygonalen Querschnitt aufweist. Das Einsatzwerkzeug ist vorzugsweise als ein Bohrer oder als ein Meißel ausgebildet. Es ist jedoch auch denkbar, dass das Einsatzwerkzeug als ein anderes, einem Fachmann als sinnvoll erscheinendes, Einsatzwerkzeug ausgebildet ist. Vorzugsweise ist das Einsatzwerkzeug frei von einer speziellen Ausgestaltung, insbesondere frei von einer speziellen Präparation/Modifikation, zu einer Verbindung mit der Haltevorrichtung ausgebildet. Vorteilhaft ist eine Befestigung des Elektronikmoduls an Einsatzwerkzeugen unterschiedlicher Hersteller möglich. Vorteilhaft kann ein Einsatzwerkzeug besonders komfortabel mit einem an dem Einsatzwerkzeug lösbaren befestigbaren besonders robusten und langlebigen Elektronikmodul zur Verfügung gestellt werden.

Weiterhin wird vorgeschlagen, dass die Dämpfungseinheit in einem an dem Einsatzwerkzeug angeordneten Zustand des Elektronikmoduls unmittelbar an dem Einsatzwerkzeug, insbesondere an einer, insbesondere an der zuvor bereits genannten, Außenfläche des Einsatzwerkzeugs, anliegt. Es kann vorteilhaft eine besonders gleichmäßige Dämpfung und/oder axiale Relativbewegung zu dem Einsatzwerkzeug der Elektronikvorrichtung und/oder der Haltevorrichtung, insbesondere des Gehäuses, erreicht werden.

Des Weiteren wird vorgeschlagen, dass das Einsatzwerkzeug zumindest in einem an dem Einsatzwerkzeug angeordneten Zustand des Elektronikmoduls, zumindest betrachtet entlang einer Umfangsrichtung des Einsatzwerkzeugs, zumindest im Wesentlichen vollständig von der Dämpfungseinheit und der Haltevorrichtung umschlossen ist. Die Umfangsrichtung des Einsatzwerkzeugs verläuft insbesondere in einer zu der Längsachse, insbesondere Rotationsachse, des Einsatzwerkzeugs senkrecht verlaufenden Ebene. Vorzugsweise verläuft die Längsachse des Einsatzwerkzeugs zumindest in einem an dem Einsatzwerkzeug angeordneten Zustand der Haltevorrichtung zumindest im Wesentlichen parallel zu der Mittelachse des Aufnahmebereichs. Unter "im Wesentlichen parallel" soll hier insbesondere eine Ausrichtung einer Richtung relativ zu einer Bezugsrichtung, insbesondere in einer Ebene, verstanden werden, wobei die Richtung gegenüber der Bezugsrichtung eine Abweichung insbesondere kleiner als 8°, vorteilhaft kleiner als 5° und besonders vorteilhaft kleiner als 2° aufweist. Die Längsachse, insbesondere die Rotationsachse, entspricht vorzugsweise einer Haupterstreckungsachse des Einsatzwerkzeugs. Unter einer "Haupterstreckungsachse" eines Objekts soll dabei insbesondere eine Achse verstanden werden, welche parallel zu einer längsten Kante eines kleinsten geometrischen Quaders verläuft, welcher das Objekt gerade noch vollständig umschließt. Es kann vorteilhaft eine besonders effektive Dämpfung von auf die Elektronikvorrichtung einwirkenden Schwingungen bei einer gleichzeitig besonders sicheren Halterung des Elektronikmoduls an dem Einsatzwerkzeug erreicht werden.

Weiter geht die Erfindung aus von einem, insbesondere dem zuvor bereits genannten oder einem alternativen, Elektronikmodul für ein, insbesondere das zuvor bereits genannte, Einsatzwerkzeug, mit zumindest einer, insbesondere der zuvor bereits genannten, Elektronikvorrichtung zu einem Verarbeiten und/oder Erfassen von einsatzwerkzeugspezifischen Kenngrößen, wobei die Elektronikvorrichtung zumindest eine Identifikationseinheit zu einer Identifikation des Einsatzwerkzeugs umfasst, und mit zumindest einer, insbesondere der zuvor bereits genannten, Haltevorrichtung zu einer lösbaren Halterung der Elektronikvorrichtung an dem Einsatzwerkzeug, insbesondere an einer, insbesondere der zuvor bereits genannten, Außenfläche des Einsatzwerkzeugs.

Es wird vorgeschlagen, dass die Elektronikvorrichtung zumindest eine Erfassungseinheit aufweist, die dazu vorgesehen ist, zumindest eine einsatzwerkzeugspezifische Kenngröße, insbesondere zumindest zu einer Ermittlung eines Verschleißzustands und/oder eines Fallereignisses des Einsatzwerkzeugs, aktiv zu erfassen. Die Erfassungseinheit umfasst vorzugsweise eine Vielzahl an unterschiedlichen Sensoren, um insbesondere eine Vielzahl unterschiedlicher einsatzwerkzeugspezifischer Kenngrößen zu erfassen. Es ist jedoch auch denkbar, dass die Erfassungseinheit lediglich einen Sensor umfasst, um eine einsatzwerkzeugspezifische Kenngröße des Einsatzwerkzeugs zu erfassen. Die Erfassungseinheit umfasst beispielsweise zumindest einen Temperatursensor, einen Bewegungssensor, einen optischen Sensor, einen akustischen Sensor, einen Lokalisierungssensor, einen Feuchtigkeitssensor und/oder dergleichen. Die zumindest eine einsatzwerkzeugspezifische Kenngröße ist beispielsweise als Temperaturkenngröße, als Bewegungskenngröße, als optische Kenngröße, als Akustikkenngröße, als Positionskenngröße, Feuchtigkeitskenngröße oder dergleichen ausgebildet. Vorzugsweise umfasst die Elektronikvorrichtung und/oder ein externes Gerät eine Steuer- oder Regeleinheit zu einer Verarbeitung von mittels der Erfassungseinheit erfassten Daten zu der zumindest einen einsatzwerkzeugspezifischen Kenngröße. Unter einer "Steuer- oder Regeleinheit" soll insbesondere eine Einheit mit zumindest einer Steuerelektronik verstanden werden. Unter einer "Steuerelektronik" soll insbesondere eine Einheit mit einer Prozessoreinheit und mit einer Speichereinheit sowie mit einem in der Speichereinheit gespeicherten Betriebsprogramm verstanden werden. Vorzugsweise weist die Steuer- oder Regeleinheit zumindest eine, insbesondere kabellose und/oder kabellose, Kommunikationsschnittstelle auf, die vorzugsweise zumindest zu einer Aktualisierung des Betriebsprogramms nutzbar ist. Es ist denkbar, dass die Steuer- oder Regeleinheit/en der Elektronikvorrichtung und/oder dem externen Gerät zumindest teilweise auf künstlicher Intelligenz basiert und insbesondere zu einem maschinellen Lernen eingerichtet ist. Beispielsweise verarbeiten/t die Steuer- oder Regeleinheit/en der Elektronikvorrichtung und/oder des externen Geräts mittels der Erfassungseinheit erfasste Daten zumindest teilweise mittels eines selbstlernenden Algorithmus. Das externe Gerät ist beispielsweise als Laptop, als Handwerkzeugmaschine, als Cloudserver, als Smartphone, als Computer oder dergleichen ausgebildet. Insbesondere sind Daten zwischen der Elektronikvorrichtung und dem externen Gerät übertragbar, beispielsweise über eine Kommunikationseinheit der Elektronikvorrichtung. Es ist denkbar, dass die Kommunikationseinheit zu einem kabellosen und/oder kabelgebundenen Datenaustausch zwischen der Elektronikvorrichtung und dem externen Gerät eingerichtet ist. Die Kommunikationseinheit umfasst beispielsweise ein WLAN-Modul, ein Bluetooth-Low-Energy-Modul, ein Zigbee-Modul oder ein anderes, einem Fachmann als sinnvoll erscheinendes Kommunikationsmodul. Vorzugsweise sind die Bauteile und/oder Einheiten der Elektronikvorrichtung zumindest teilweise, bevorzugt größtenteils, insbesondere zumindest die Erfassungseinheit, die Kommunikationseinheit und/oder die Steuer- oder Regeleinheit, an/auf einer gemeinsamen Leiterplatte angeordnet. Vorzugsweise ist die zumindest eine einsatzwerkzeugspezifische Kenngröße dazu vorgesehen, zu einer Ermittlung eines Verschleißzustands und/oder eines Fallereignisses des Einsatzwerkzeugs ausgewertet zu werden, bevorzugt mittels der Steuer- oder Regeleinheit. Vorzugsweise sind/ist in Abhängigkeit von der zumindest einen einsatzwerkzeugspezifischen Kenngröße ein Verschleißzustand und/oder ein Fallereignis des Elektronikmoduls, insbesondere der Elektronikvorrichtung, ermittelbar, insbesondere mittels der Steuer- oder Regeleinheit des externen Geräts und/oder der Elektronikvorrichtung. Die Steuer-oder Regeleinheit/en der Elektronikvorrichtung und/oder dem externen Gerät sind/ist insbesondere dazu eingerichtet, aus mittels der Erfassungseinheit ermittelten Daten zu der zumindest einen einsatzwerkzeugspezifischen Kenngröße zumindest eine Nutzungscharakteristik des Einsatzwerkzeugs, beispielsweise eine Nutzungsdauer, eine Nutzungsart, eine Nutzungsanzahl, insbesondere eine Bohrlochanzahl oder dergleichen, eine Nutzungsintensität oder dergleichen, zu ermitteln. Es ist auch denkbar, dass die Steuer- oder Regeleinheit der Elektronikvorrichtung und/oder dem externen Gerät dazu eingerichtet ist, anhand von mittels der Erfassungseinheit erfassten Daten zu der zumindest einen einsatzwerkzeugspezifischen Kenngröße, insbesondere mittels Algorithmen, beispielsweise eine Bohrzeit, eine Bohrlochanzahl oder dergleichen zu berechnen und zu akkumulieren. Beispielsweise erfolgt eine Berechnung/Akkumulation einer Nutzungscharakteristik, insbesondere der Bohrzeit und der Bohrlochanzahl, durch die Steuer- oder Regeleinheit der Elektronikvorrichtung und/oder dem externen Gerät mittels eines gleitenden Mittelwerts, einer Hüllkurve von erfassten Werten der zumindest einen einsatzwerkzeugspezifischen Kenngröße, insbesondere der erfassten Beschleunigungswerte, und/oder einer Verwendung selektiver Amplitudenwerte, wobei Amplituden insbesondere mittels eines RMS-Wertes umrechenbar sind. Eine Ermittlung eines Fallereignisses, insbesondere eines Freifallereignisses, des Einsatzwerkzeugs basiert vorzugsweise auf einem Algorithmus, der eine Veränderung einer Beschleunigung des Einsatzwerkzeugs in Bezug auf die Erdbeschleunigung detektiert, wobei erfasste Beschleunigungswerte vorzugsweise mittels eines RMS-Wertes umrechenbar sind, sodass insbesondere ein gleitender Mittelwert bildbar ist und mit einem, vorzugsweise auf einer Datenbank hinterlegten, Wertebereich, insbesondere einem Schwellwert, vergleichbar ist. Die Steuer- oder Regeleinheit/en der Elektronikvorrichtung und/oder dem externen Gerät sind/ist vorzugsweise dazu eingerichtet, in Abhängigkeit von mittels der Erfassungseinheit erfassten Daten zu der zumindest einen einsatzwerkzeugspezifischen Kenngröße, insbesondere in Abhängigkeit von der zumindest einen Nutzungscharakteristik, einen Verschleißzustand des Einsatzwerkzeugs, ein Fallereignis des Einsatzwerkzeugs oder dergleichen zu ermitteln. Es ist auch denkbar, dass in Abhängigkeit von mittels der Erfassungseinheit erfassten Daten zu der zumindest einen einsatzwerkzeugspezifischen Kenngröße, insbesondere in Abhängigkeit von der zumindest einen Nutzungscharakteristik, von dem Verschleißzustand und/oder von ermittelten Fallereignissen eine automatische Bestellung und/oder Lieferung von Ersatzteilen oder dergleichen durchführbar ist, beispielsweise durch eine Übertragung der erfassten und/oder ausgewerteten Daten an das, beispielsweise als Cloudserver ausgebildete, externe Gerät mittels der Kommunikationseinheit. Ferner ist denkbar, dass in Abhängigkeit von mittels der Erfassungseinheit erfassten Daten zu der zumindest einen einsatzwerkzeugspezifischen Kenngröße, insbesondere in Abhängigkeit von der zumindest einen Nutzungscharakteristik, ein Material des von dem Einsatzwerkzeug bearbeiteten Werkstücks ermittelbar ist, vorzugsweise mittels der Steuer- oder Regeleinheit der Elektronikvorrichtung und/oder dem externen Gerät. Vorzugsweise ist die Erfassungseinheit verschieden von einem Sendermodul ausgebildet, das dazu eingerichtet ist, bereits auf einem Speicher des Sendemoduls hinterlegte einsatzwerkzeugspezifische Daten, auszusenden und/oder zu übertragen. Insbesondere ist die Erfassungseinheit verschieden von einem RFID-Tag ausgebildet, der dazu eingerichtet ist, eine bereits hinterlegte Kennung eines Einsatzwerkzeugs auszusenden und/oder zu übertragen.

Es ist denkbar, dass die Identifikationseinheit der Elektronikvorrichtung als RFID-Tag ausgebildet ist. Es ist auch denkbar, dass die Identifikationseinheit durch die Erfassungseinheit gebildet ist, wobei die Erfassungseinheit bevorzugt dazu eingerichtet ist, eine als Identifikationskenngröße des Einsatzwerkzeugs ausgebildete einsatzwerkzeugspezifische Kenngröße aktiv zu erfassen. Es ist denkbar, dass die als Identifikationskenngröße ausgebildete einsatzwerkzeugspezifische Kenngröße dazu vorgesehen ist, zu einer Identifikation des Einsatzwerkzeugs ausgewertet zu werden, vorzugsweise mittels der Steuer- oder Regeleinheit der Elektronikvorrichtung und/oder dem externen Gerät. Vorzugsweise ist dem Einsatzwerkzeug durch eine Identifikation ein digitales Datenblatt zuordenbar. Das digitale Datenblatt umfasst beispielsweise eine Produktkennung, eine Einsatzwerkzeugart, ein Einsatzwerkzeugdurchmesser, eine Herstellerinformation, ein Herstellungsdatum, ein Einsatzwerkzeugmaterial oder dergleichen. Vorzugsweise sind Informationen zu einer Identifikation des Einsatzwerkzeugs, an dem die Elektronikvorrichtung insbesondere angeordnet ist auf/von einer Speichereinheit der Elektronikvorrichtung speicherbar/abrufbar. Es kann vorteilhaft ein besonders hoher Kundennutzen realisiert werden. Vorteilhaft kann ein handelsübliches Einsatzwerkzeug besonders einfach und schnell in ein Internet-of-Things-Netzwerk eingebunden werden. Vorteilhaft kann ein Abstand der Erfassungseinheit zu dem Einsatzwerkzeug bei einer Erfassung der zumindest einen einsatzwerkzeugspezifischen Kenngröße besonders gering gehalten werden. Es kann vorteilhaft eine besonders präzise Messung der zumindest einen einsatzwerkzeugspezifischen Kenngröße erfolgen. Vorteilhaft kann ein Zustand des Einsatzwerkzeugs besonders präzise und komfortabel überwacht werden. Vorteilhaft kann eine besonders effiziente Nutzung eines Einsatzwerkzeugs unterstützt werden. Mittels der Erfassungseinheit können Beschädigungen und/oder Ausfälle des Einsatzwerkzeugs besonders schnell und/oder zuverlässig automatisch erfasst werden.

Ferner wird vorgeschlagen, dass die Erfassungseinheit zumindest einen, insbesondere den zuvor bereits genannten, Temperatursensor umfasst, der dazu vorgesehen ist, zumindest eine als Temperaturkenngröße des Einsatzwerkzeugs ausgebildete einsatzwerkzeugspezifische Kenngröße in einem an dem Einsatzwerkzeug angeordneten Zustand der Elektronikvorrichtung, insbesondere zumindest zu einer Ermittlung eines Verschleißzustands des Einsatzwerkzeugs, zu erfassen. Vorzugsweise ist die Temperaturkenngröße eine Temperatur des Einsatzwerkzeugs. Es ist auch denkbar, dass die Temperaturkenngröße beispielsweise eine Rotationsgeschwindigkeit oder dergleichen ist, aus der eine Temperatur des Einsatzwerkzeugs und/oder der Elektronikvorrichtung ermittelbar ist, bevorzugt mittels der Steuer- oder Regeleinheit. Der Temperatursensor ist beispielsweise als Heißleiter, Kaltleiter, als integrierter Halbleiter-Temperatursensor, als Diode, als Temperaturfühler mit Schwingquarz, als Thermoelement oder als ein anderer, einem Fachmann als sinnvoll erscheinender Temperatursensor ausgebildet. Zu einer Erfassung einer als Rotationsgeschwindigkeit oder dergleichen ausgebildeten Temperaturkenngröße ist der Temperatursensor vorzugsweise als ein einem Fachmann als sinnvoller Geschwindigkeitssensor oder Beschleunigungssensor ausgebildet. Zusätzlich ist denkbar, dass der Temperatursensor dazu eingerichtet ist, eine Temperaturkenngröße der Elektronikvorrichtung zu erfassen. Es ist denkbar, dass eine Temperaturkenngröße, insbesondere eine Temperatur, der Elektronikvorrichtung in Abhängigkeit von der als Temperaturkenngröße des Einsatzwerkzeugs ausgebildeten einsatzwerkzeugspezifischen Kenngröße ermittelbar ist, vorzugsweise mittels der Steuer- oder Regeleinheit der Elektronikvorrichtung und/oder dem externen Gerät. Insbesondere ist anhand von erfassten Daten zu der als Temperaturkenngröße ausgebildeten einsatzwerkzeugspezifischen Kenngröße ein Temperaturgradient ermittelbar, vorzugsweise mittels der Steuer- oder Regeleinheit der Elektronikvorrichtung und/oder dem externen Gerät. Beispielsweise sind in Abhängigkeit von dem ermittelten Temperaturgradienten Informationen zu einer Verwendung des Einsatzwerkzeugs, zu dem mittels des Einsatzwerkzeugs bearbeiteten Werkstück, insbesondere einem Material des bearbeiteten Werkstücks, und/oder eine Dauer eines Bearbeitungsvorgangs mit dem Einsatzwerkzeug, insbesondere eines Bohrvorgangs oder dergleichen, ermittelbar, bevorzugt mittels der Steuer- oder Regeleinheit der Elektronikvorrichtung und/oder dem externen Gerät. Vorteilhaft kann eine Temperaturkenngröße, insbesondere eine Temperatur, des Einsatzwerkzeugs und/oder der Elektronikvorrichtung erfasst, überwacht und/oder ermittelt werden. Vorteilhaft kann zumindest ein Verschleißzustand des Einsatzwerkzeugs in Abhängigkeit von einer mittels der Erfassungseinheit erfassbaren als Temperaturkenngröße des Einsatzwerkzeugs ausgebildeten einsatzwerkzeugspezifischen Kenngröße ermittelt werden.

Außerdem wird vorgeschlagen, dass die Erfassungseinheit zumindest einen Bewegungssensor umfasst, der dazu vorgesehen ist, zumindest eine als Bewegungskenngröße des Einsatzwerkzeugs ausgebildete einsatzwerkzeugspezifische Kenngröße in einem an dem Einsatzwerkzeug angeordneten Zustand der Elektronikvorrichtung, insbesondere zumindest zu einer Ermittlung eines Verschleißzustands und/oder eines Fallereignisses des Einsatzwerkzeugs, zu erfassen. Die Bewegungskenngröße kann beispielsweise eine Beschleunigung, eine Rotationsgeschwindigkeit, eine Vibration, eine Lage/Orientierung oder dergleichen des Einsatzwerkzeugs sein. Der Bewegungssensor ist beispielsweise als MEMS-Sensor, als Piezo-Sensor oder als ein anderer, einem Fachmann als sinnvoll erscheinender Bewegungssensor ausgebildet. Beispielsweise ist ein als Beschleunigungssensor ausgebildeter Bewegungssensor dazu eingerichtet, insbesondere zumindest in einem an dem Einsatzwerkzeug angeordneten Zustand der Elektronikvorrichtung, vorzugsweise mit einer bestimmten Abtastrate, bei einer Nutzung des Einsatzwerkzeugs entstehende Beschleunigungsamplituden, bevorzugt in allen drei Raumrichtungen zu erfassen. Beispielsweise ist zumindest in Abhängigkeit von einer als Beschleunigung ausgebildeten Beschleunigungskenngröße ein Fallereignis des Einsatzwerkzeugs ermittelbar, vorzugsweise mittels der Steuer- oder Regeleinheit der Elektronikvorrichtung und/oder dem externen Gerät. Es ist auch denkbar, dass anhand von mittels des Bewegungssensors ermittelten Daten zu der zumindest einen Bewegungskenngröße eine Anzahl von durchgeführten Bohrungen, eine Betriebszeit des Einsatzwerkzeugs oder dergleichen ermittelbar ist, wobei insbesondere in Abhängigkeit davon ein Verschleißzustand des Einsatzwerkzeugs ermittelbar ist, besonders bevorzugt mittels der Steuer- oder Regeleinheit der Elektronikvorrichtung und/oder dem externen Gerät. Vorzugsweise ist in Abhängigkeit von der als Beschleunigungskenngröße ausgebildeten einsatzwerkzeugspezifischen Kenngröße eine unsachgemäße Nutzung des Einsatzwerkzeugs, beispielsweise auftretende Stöße oder dergleichen, ermittelbar, insbesondere mittels der Steuer- oder Regeleinheit der Elektronikvorrichtung und/oder dem externen Gerät. Vorteilhaft kann eine Bewegungskenngröße, insbesondere eine Beschleunigung, insbesondere eine Rotationsgeschwindigkeit, des Einsatzwerkzeugs und/oder der Elektronikvorrichtung erfasst, überwacht und/oder ermittelt werden. Vorteilhaft kann zumindest ein Verschleißzustand des Einsatzwerkzeugs in Abhängigkeit von einer mittels der Erfassungseinheit erfassbaren als Bewegungskenngröße des Einsatzwerkzeugs ausgebildeten einsatzwerkzeugspezifischen Kenngröße ermittelt werden.

Weiterhin wird vorgeschlagen, dass die Erfassungseinheit zumindest einen optischen Sensor umfasst, der dazu vorgesehen ist, zumindest eine als optische Kenngröße des Einsatzwerkzeugs ausgebildete einsatzwerkzeugspezifische Kenngröße zumindest in einem an dem Einsatzwerkzeug angeordneten Zustand der Elektronikvorrichtung, insbesondere zumindest zu einer Identifikation des Einsatzwerkzeugs und/oder zu einer Ermittlung eines Verschleißzustands des Einsatzwerkzeugs, zu erfassen. Die optische Kenngröße ist vorzugsweise ein optisches Signal, beispielsweise sichtbares Licht, Infrarotstrahlung, UV-Strahlung oder dergleichen. Es ist denkbar, dass der optische Sensor als Radarsensor, als LIDAR-Sensor, als SAR-Sensor, als Lasersensor, als Kamerasensor oder als ein anderer, einem Fachmann als sinnvoll erscheinender optischer Sensor ausgebildet ist. Es ist denkbar, dass mittels des optischen Sensors erfasste Daten, insbesondere zumindest zu der als optische Kenngröße ausgebildeten einsatzwerkzeugspezifischen Kenngröße, in einem bildgebenden Verfahren verarbeitbar sind, vorzugsweise mittels der Steuer- oder Regeleinheit der Elektronikvorrichtung und/oder dem externen Gerät. Vorzugsweise ist der optische Sensor dazu vorgesehen, einen an dem Einsatzwerkzeug angeordneten Identifikationscode, beispielsweise einen alpha-nummerischen Code, einen Barcode, einen QR-Code oder dergleichen, zu erfassen. Insbesondere ist das Einsatzwerkzeug in Abhängigkeit von dem mittels des optischen Sensors erfassten, an dem Einsatzwerkzeug angeordneten, Identifikationscode identifizierbar, vorzugsweise mittels der Steuer- oder Regeleinheit der Elektronikvorrichtung und/oder dem externen Gerät. Es ist auch denkbar, dass das Einsatzwerkzeug anhand von mittels des optischen Sensors erfassten Daten zu der zumindest einen optischen Kenngröße, die insbesondere in einem bildgebenden Verfahren verarbeitet wurden, identifizierbar ist, vorzugsweise mittels der Steuer- oder Regeleinheit der Elektronikvorrichtung und/oder dem externen Gerät. Es ist denkbar, dass die mittels des optischen Sensors erfassten Daten zu der zumindest einen optischen Kenngröße mit einer Datenbank, vorzugsweise mittels der Steuer- oder Regeleinheit der Elektronikvorrichtung und/oder dem externen Gerät, abgleichbar sind, auf der vorzugsweise zumindest Referenzdaten zu der optischen Kenngröße, die insbesondere einem neuwertigen Einsatzwerkzeug entsprechen, abgelegt sind. Bevorzugt ist aufgrund des Abgleichs ein Verschleißzustand des Einsatzwerkzeugs ermittelbar. Zusätzlich oder alternativ ist denkbar, dass die Erfassungseinheit, insbesondere der optische Sensor, dazu eingerichtet ist, einen an der Handwerkzeugmaschine, insbesondere an oder in der Einsatzwerkzeugaufnahme, angeordneten Zustand automatisch zu erkennen. Es ist denkbar, dass ein Befestigungszeitpunkt des Einsatzwerkzeugs an der Handwerkzeugmaschine gespeichert wird. Es ist auch denkbar, dass eine Befestigungsdauer des Einsatzwerkzeugs an der Handwerkzeugmaschine und/oder ein Lösen des Einsatzwerkzeugs von der Einsatzwerkzeugmaschine mittels der Erfassungseinheit, vorzugsweise automatisch, erfassbar ist und insbesondere durch die Elektronikvorrichtung, insbesondere auf der Speichereinheit der Elektronikvorrichtung, speicherbar ist. Vorteilhaft kann über ein mittels der Erfassungseinheit erfasstes optisches Signal des Einsatzwerkzeugs ein Zustand des Einsatzwerkzeugs erfasst, überwacht und/oder ermittelt werden. Es kann vorteilhaft über ein mittels der Erfassungseinheit erfasstes optisches Signal des Einsatzwerkzeugs eine Identifikation des Einsatzwerkzeugs erfolgen.

Des Weiteren wird vorgeschlagen, dass die Erfassungseinheit zumindest einen akustischen Sensor umfasst, der dazu vorgesehen ist, zumindest eine als Akustikkenngröße des Einsatzwerkzeugs ausgebildete einsatzwerkzeugspezifische Kenngröße in einem an dem Einsatzwerkzeug angeordneten Zustand der Elektronikvorrichtung, insbesondere zu einer Ermittlung eines Verschleißzustands des Einsatzwerkzeugs, zu erfassen. Vorzugsweise ist die als Akustikkenngröße ausgebildete einsatzwerkzeugspezifische Kenngröße ein durch das Einsatzwerkzeug in einem Betrieb erzeugtes Akustiksignal, insbesondere eine Frequenz und/oder eine Lautstärke. Vorzugsweise ist anhand der als Akustikkenngröße ausgebildeten einsatzwerkzeugspezifischen Kenngröße ein Verschleißzustand des Einsatzwerkzeugs ermittelbar, bevorzugt mittels der Steuer- oder Regeleinheit der Elektronikvorrichtung und/oder dem externen Gerät. Es ist denkbar, dass die mittels des akustischen Sensors erfassten Daten zu der zumindest einen Akustikkenngröße mit einer Datenbank, vorzugsweise mittels der Steuer- oder Regeleinheit der Elektronikvorrichtung und/oder dem externen Gerät, abgleichbar sind, auf der insbesondere zumindest Referenzdaten zu der Akustikkenngröße abgelegt sind, die insbesondere einem neuwertigen Einsatzwerkzeug entsprechen. Besonders bevorzugt ist aufgrund des Abgleichs ein Verschleißzustand des Einsatzwerkzeugs ermittelbar. Der akustische Sensor ist beispielsweise als Mikrofon, als Ultraschallsensor oder als ein anderer, einem Fachmann als sinnvoll erscheinender akustischer Sensor ausgebildet. Vorteilhaft kann über eine mittels der Erfassungseinheit erfasste Akustikkenngröße des Einsatzwerkzeugs ein Zustand des Einsatzwerkzeugs erfasst, überwacht und/oder ermittelt werden.

Ferner wird vorgeschlagen, dass die Erfassungseinheit zumindest eine Lokalisierungssensorik umfasst, die dazu eingerichtet ist, eine als Positionskenngröße des Einsatzwerkzeugs ausgebildete einsatzwerkzeugspezifische Kenngröße in einem an dem Einsatzwerkzeug angeordneten Zustand der Elektronikvorrichtung, insbesondere flächendeckend, zu erfassen, insbesondere in Echtzeit zu tracken. Die Lokalisierungssensorik ist insbesondere dazu eingerichtet, beispielsweise mittels GPS, Bluetooth-Low-Energy, UWB, WLAN, Zigbee oder dergleichen, eine Position des Einsatzwerkzeugs in einem an dem Einsatzwerkzeug angeordneten Zustand der Elektronikvorrichtung zu erfassen. Insbesondere ist die Lokalisierungssensorik dazu eingerichtet, die Positionskenngröße, insbesondere die Position, des Einsatzwerkzeugs flächendeckend und/oder in Echtzeit zu tracken. Es ist auch denkbar, dass eine Position des Einsatzwerkzeugs in einem an dem Einsatzwerkzeug angeordneten Zustand der Elektronikvorrichtung mittels Fingerprinting, Gateways oder dergleichen erfassbar ist. Beispielsweise ist eine Position des Einsatzwerkzeugs in einem an dem Einsatzwerkzeug angeordneten Zustand der Elektronikvorrichtung mittels der Lokalisierungssensorik über ein Smartphone oder dergleichen überwachbar. Vorzugsweise ist die Lokalisierungssensorik verschieden von einem RFID-Tag ausgebildet. Es ist jedoch alternativ oder zusätzlich auch denkbar, dass eine Position des Einsatzwerkzeugs mittels eines RFID-Tags oder dergleichen erfassbar ist. Es ist denkbar, dass die mittels der Lokalisierungssensorik erfassten Daten zu der Positionskenngröße zu einer Ermittlung eines Verschleißzustands auswertbar sind, vorzugsweise mittels der Steuer- oder Regeleinheit der Elektronikvorrichtung und/oder dem externen Gerät. Beispielsweise ist anhand der Positionskenngröße eine unsachgemäße Lagerung, insbesondere eine zu feuchte, kalte, heiße Lagerung, des Einsatzwerkzeugs und/oder der Elektronikvorrichtung ermittelbar. Es kann vorteilhaft eine unsachgemäße Nutzung des Einsatzwerkzeugs, insbesondere eine unsachgemäße Lagerung des Einsatzwerkzeugs und/oder der Elektronikvorrichtung, anhand einer mittels der Erfassungseinheit erfassten als Positionskenngröße ausgebildeten einsatzwerkzeugspezifischen Kenngröße ermittelt werden.

Außerdem wird vorgeschlagen, dass die Elektronikvorrichtung zumindest eine, insbesondere die zuvor bereits genannte, Speichereinheit umfasst, die dazu eingerichtet ist, mittels der Erfassungseinheit erfasste Daten zu der zumindest einen einsatzwerkzeugspezifischen Kenngröße zumindest teilweise, insbesondere automatisch, abzuspeichern. Die Speichereinheit ist beispielsweise als SSD, als RAM oder dergleichen ausgebildet. Vorzugsweise ist die Elektronikvorrichtung dazu eingerichtet, die zumindest eine einsatzspezifische Kenngröße kontinuierlich zu erfassen oder in Zeitabständen automatisch zu erfassen. Bevorzugt sind die Zeitabstände, in denen die Erfassungseinheit die zumindest eine einsatzwerkzeugspezifische Kenngröße erfasst, einstellbar, vorzugsweise mittels der Steuer- oder Regeleinheit der Elektronikvorrichtung und/oder dem externen Gerät. Es ist denkbar, dass die Zeitabstände stufenlos oder stufenartig einstellbar sind. Es ist auch denkbar, dass zwischen einer kontinuierlichen Erfassung und einer Erfassung in Zeitabständen gewechselt werden kann. Beispielsweise umfasst das externe Gerät und/oder die Elektronikvorrichtung zumindest eine Eingabeeinheit. Es ist denkbar, dass Einstellungen der Elektronikvorrichtung, insbesondere der Erfassungseinheit und/oder der Steuer- oder Regeleinheit, über die Eingabeeinheit durch einen Nutzer einstellbar sind. Es ist denkbar, dass die Eingabeeinheit an dem Gehäuse angeordnet ist. Es ist auch denkbar, dass über die Eingabeeinheit Informationen zu dem Einsatzwerkzeug, an dem die Elektronikvorrichtung angeordnet ist, eingebbar sind, insbesondere zumindest zu einer manuellen Identifikation/Zuordnung des Einsatzwerkzeugs. Die Eingabeeinheit ist beispielsweise als Tastenfeld, als Einstellrad, als Touchscreen oder als eine andere, einem Fachmann als sinnvoll erscheinende Eingabeeinheit ausgebildet. Es ist auch denkbar, dass die Eingabeeinheit der Elektronikvorrichtung eine kabellose oder kabelgebundene Kommunikationsschnittstelle umfasst, über die Informationen, beispielsweise über das externe Gerät, eingebbar sind. Es ist auch denkbar, dass die Kommunikationsschnittstelle der Eingabeeinheit von der Kommunikationseinheit gebildet ist. Es ist auch denkbar, dass die Erfassungseinheit dazu eingerichtet ist, die zumindest eine einsatzwerkzeugspezifische Kenngröße lediglich in einem Antriebszustand des Einsatzwerkzeugs zu erfassen. Beispielsweise ist ein Antriebszustand über die Kommunikationseinheit von dem externen Gerät, insbesondere der Handwerkzeugmaschine, an die Elektronikvorrichtung, insbesondere die Steuer- oder Regeleinheit und/oder die Erfassungseinheit, kommunizierbar. Es ist auch denkbar, dass ein Antriebszustand des Einsatzwerkzeugs durch die Erfassungseinheit erfassbar ist. Vorzugsweise ist die Speichereinheit dazu eingerichtet, mittels der Erfassungseinheit erfasste Daten zu der zumindest einen einsatzwerkzeugspezifischen Kenngröße kontinuierlich automatisch zu speichern. Es ist denkbar, dass die Speichereinheit als Ringspeicher ausgebildet ist oder dazu vorgesehen ist, die mittels der Erfassungseinheit erfassten Daten dauerhaft zu speichern. Vorzugsweise sind auf der Speichereinheit gespeicherte Daten von der Steuer- oder Regeleinheit der Erfassungsvorrichtung und/oder dem externen Gerät auslesbar. Es kann vorteilhaft zeitlich und/oder räumlich besonders flexibel eine Ermittlung eines Verschleißzustands, eines Fallereignisses und/oder eine Identifikation eines Einsatzwerkzeugs, an dem das Elektronikmodul angeordnet ist, erfolgen.

Weiterhin wird vorgeschlagen, dass die Elektronikvorrichtung dazu eingerichtet ist, Daten zu der zumindest einen mittels der Erfassungseinheit in einem an dem Einsatzwerkzeug angeordneten Zustand der Elektronikvorrichtung erfassten einsatzwerkzeugspezifischen Kenngröße vor einem Abspeichern und/oder Übertragen zu filtern. Vorzugsweise ist die Steuer- oder Regeleinheit der Elektronikvorrichtung und/oder dem externen Gerät dazu eingerichtet, die mittels der Erfassungseinheit erfassten Daten zu der zumindest einen einsatzwerkzeugspezifischen Kenngröße mit einem Anti-Alias-Filter oder dergleichen zu filtern. Es ist denkbar, dass die Erfassungseinheit derart einstellbar ist, dass die Erfassungseinheit Daten zu der zumindest einen einsatzwerkzeugspezifischen Kenngröße lediglich erfasst, wenn diese in einem gewissen Wertebereich liegen. Es ist auch denkbar, dass die Speichereinheit dazu eingerichtet ist, mittels der Erfassungseinheit erfasste Daten abzuspeichern, wenn diese in dem eingestellten Wertebereich liegen. Es ist denkbar, dass auf einer Datenbank, die vorzugsweise auf der Speichereinheit der Elektronikvorrichtung oder dem externen Gerät hinterlegt ist, ein Wertebereich für die zumindest eine einsatzwerkzeugspezifische Kenngröße hinterlegt ist, in Abhängigkeit von dem insbesondere die Erfassungseinheit Daten zu der zumindest einen einsatzwerkzeugspezifischen Kenngröße erfasst und/oder in Abhängigkeit von dem die Speichereinheit mittels der Erfassungseinheit erfasste Daten zu der zumindest einen einsatzwerkzeugspezifischen Kenngröße abspeichert. Vorzugsweise ist der Wertebereich derart einstellbar, dass zu einer Ermittlung eines Verschleißzustands, eines Fallereignisses und/oder einer Identifikation des Einsatzwerkzeugs relevante Werte zu der zumindest einen einsatzwerkzeugspezifischen Kenngröße erfassbar und/oder speicherbar sind. Vorteilhaft kann ein Elektronikmodul mit einer besonders effizienten Datenverarbeitung bereitgestellt werden. Vorteilhaft kann ein Bauteilbedarf, insbesondere ein Bedarf an Speicherkapazität, an Rechenkapazität, an Energiespeicherkapazität und/oder an Erfassungskapazität, zu einer Ermittlung eines Verschleißzustands, eines Fallereignisses des Einsatzwerkzeugs und/oder einer Identifikation des Einsatzwerkzeugs anhand von mittels der Erfassungseinheit ermittelter Daten besonders gering gehalten werden.

Ferner wird vorgeschlagen, dass die Elektronikvorrichtung zumindest eine Ausgabeeinheit umfasst, die dazu vorgesehen ist, in Abhängigkeit von der zumindest einen mittels der Erfassungseinheit erfassten einsatzwerkzeugspezifischen Kenngröße, insbesondere in Abhängigkeit von der zumindest einen Nutzungscharakteristik, eine Information, die insbesondere eine Handlungsanweisung und/oder einen Verwendungshinweis umfasst, auszugeben. Vorzugsweise ist die Ausgabeeinheit an dem Gehäuse angeordnet. Es ist alternativ auch denkbar, dass die Elektronikvorrichtung frei von einer Ausgabeeinheit ausgebildet ist. Alternativ oder zusätzlich ist auch denkbar, dass an dem externen Gerät eine Ausgabeeinheit angeordnet ist. Die Ausgabeeinheit kann beispielsweise als ein Bildschirm, als ein Lautsprecher, als eine Beleuchtungseinheit, insbesondere LEDs oder dergleichen, als ein Lasermodul oder dergleichen ausgebildet sein. Die Information kann beispielsweise die zumindest eine Nutzungscharakteristik, einen Verschleißzustand des Einsatzwerkzeugs, Informationen zu Fallereignissen des Einsatzwerkzeugs, Beschädigungsinformationen, eine Handlungsanweisung, eine Arbeitsunterstützungsinformation, einen Verwendungshinweis oder dergleichen umfassen. Beispielsweise ist einem Nutzer in Abhängigkeit von einer Identifikation des Einsatzwerkzeugs mittels der Identifikationseinheit, insbesondere der Erfassungseinheit, eine Information zu Einsatzmöglichkeiten des Einsatzwerkzeugs, eine Bedienungsanleitung, Garantiebedingungen, Handlungsanweisungen oder dergleichen ausgebbar, insbesondere zumindest über die Ausgabeeinheit der Elektronikvorrichtung und/oder des externen Geräts. Ferner ist denkbar, dass ein Nutzer in Abhängigkeit von mittels der Erfassungseinheit erfassten Daten zu der zumindest einen einsatzwerkzeugspezifischen Kenngröße, insbesondere in Abhängigkeit von der zumindest einen Nutzungscharakteristik, bei einem Bestellvorgang unterstützt/beraten werden kann, insbesondere über die Ausgabeeinheit der Elektronikvorrichtung und/oder des externen Geräts. Es ist auch denkbar, dass über die Ausgabeeinheit der Elektronikvorrichtung und/oder des externen Geräts ein Händlerstandort, ein Preis eines Einsatzwerkzeugs oder dergleichen ausgebbar ist. Es ist denkbar, dass die Elektronikvorrichtung zumindest eine Arbeitsbeleuchtungseinheit umfasst, die dazu vorgesehen ist, zumindest einen Arbeitsbereich des Einsatzwerkzeugs zu beleuchten. Die Arbeitsbeleuchtungseinheit ist vorzugsweise an dem Gehäuse angeordnet. Es ist denkbar, dass die Arbeitsbeleuchtungseinheit lösbar an dem Gehäuse befestigbar ist oder fest mit dem Gehäuse verbunden ist. Die Arbeitsbeleuchtungseinheit umfasst vorzugsweise zumindest eine LED, einen Laser oder dergleichen. Es ist denkbar, dass die Arbeitsbeleuchtungseinheit zumindest teilweise durch die Ausgabeeinheit der Elektronikvorrichtung gebildet ist. Vorteilhaft kann ein Elektronikmodul zu einer besonders hohen Nutzungseffizienz eines Einsatzwerkzeugs an dem Einsatzwerkzeug angeordnet werden. Vorteilhaft kann besonders zuverlässig eine Beschädigung eines Einsatzwerkzeugs ermittelt und/oder einer Beschädigung des Einsatzwerkzeugs entgegengewirkt werden.

Des Weiteren wird vorgeschlagen, dass die Elektronikvorrichtung zumindest eine Energiespeichereinheit umfasst, die dazu vorgesehen ist, zumindest die Erfassungseinheit mit elektrischer Energie zu versorgen, wobei elektrische Kontakte zwischen der Erfassungseinheit und der Energiespeichereinheit zumindest teilweise verlötet sind. Bevorzugt sind sämtliche elektrische Kontakte zwischen der Energiespeichereinheit und der Erfassungseinheit verlötet. Es ist alternativ auch denkbar, dass zumindest die elektrischen Kontakte zwischen der Erfassungseinheit und der Energiespeichereinheit frei von Lötstellen sind. Die Energiespeichereinheit ist beispielsweise als Akkumulator, als Batterie oder dergleichen ausgebildet. Vorzugsweise ist die Energiespeichereinheit in dem Gehäuse angeordnet. Die Elektronikvorrichtung, insbesondere die Energiespeichereinheit, umfasst bevorzugt zumindest einen Ladeanschluss, mittels dem die Energiespeichereinheit aufladbar ist. Es ist alternativ auch denkbar, dass das Elektronikmodul frei von einem Ladeanschluss ausgebildet ist. Vorzugsweise ist die Energiespeichereinheit auf einer Seite des Gehäuses angeordnet, die einer Seite, an der zumindest die Erfassungseinheit und/oder die Steuer- oder Regeleinheit angeordnet sind/ist, gegenüberliegt, zumindest ausgehend von der Mittelachse des Aufnahmebereichs aus betrachtet. Alternativ sind auch andere, einem Fachmann als sinnvoll erscheinende Anordnungen der Energiespeichereinheit relativ zu der Erfassungseinheit und/oder der Steuer- oder Regeleinheit denkbar. Es kann vorteilhaft eine besonders zuverlässige Erfassung von der zumindest einen einsatzwerkzeugspezifischen Kenngröße gewährleistet werden.

Ferner wird vorgeschlagen, dass zumindest die Erfassungseinheit von einem, insbesondere dem zuvor bereits genannten, Gehäuse der Haltevorrichtung umspritzt ist. Es ist denkbar, dass die Elektronikvorrichtung zumindest im Wesentlichen vollständig umspritzt ist. Es ist alternativ auch denkbar, dass zumindest die Energiespeichereinheit austauschbar an dem Gehäuse angeordnet, insbesondere mit der Erfassungseinheit verbunden, ist. Insbesondere sind/ist die Elektronikvorrichtung, insbesondere zumindest die Erfassungseinheit und/oder die Energiespeichereinheit, durch ein Mehrkomponentenspritzgussverfahren oder ein Koextrusionsverfahren von dem Gehäuse umspritzt, besonders bevorzugt vollständig. Vorzugsweise weist das Gehäuse zumindest eine Ausnehmung auf, sodass zumindest ein Ladekabel mit dem Ladeanschluss zu einem Aufladen der Energiespeichereinheit verbindbar ist. Es kann vorteilhaft ein besonders robustes Elektronikmodul, insbesondere Elektronikvorrichtung, zur Verfügung gestellt werden. Vorteilhaft kann die Elektronikvorrichtung, insbesondere die Erfassungseinheit, die Energiespeichereinheit und/oder die Steuer- oder Regeleinheit besonders effizient gegen Spritzwasser und/oder Staub geschützt werden. Es kann vorteilhaft eine feste Anordnung der Elektronikvorrichtung in dem Gehäuse, insbesondere auch bei auf das Elektronikmodul einwirkenden statischen und/oder dynamischen Lasten, gewährleistet werden.

Außerdem wird ein, insbesondere das zuvor bereits genannte oder ein alternatives, Einsatzwerkzeugsystem mit zumindest einem erfindungsgemäßen Elektronikmodul, mit zumindest einem, insbesondere dem zuvor bereits genannten, Einsatzwerkzeug und/oder mit zumindest einem, insbesondere dem zuvor bereits genannten, externen Gerät, wobei über eine, insbesondere die zuvor bereits genannte, Kommunikationseinheit der Elektronikvorrichtung Daten zwischen dem Elektronikmodul und dem externen Gerät übertragbar sind, vorgeschlagen. Es kann vorteilhaft eine besonders flexible und/oder effiziente Verarbeitung, insbesondere Auswertung und/oder Speicherung, der mittels der Erfassungseinheit erfassten zumindest einen einsatzwerkzeugspezifischen Kenngröße ermöglicht werden.

Des Weiteren wird vorgeschlagen, dass die Elektronikvorrichtung zumindest eine Steuer- oder Regeleinheit umfasst und/oder dass das Einsatzwerkzeugsystem das externe Gerät umfasst, die eine, insbesondere die zuvor bereits genannte, Steuer- oder Regeleinheit umfasst, wobei die Steuer- oder Regeleinheit der Elektronikvorrichtung und/oder dem externen Gerät dazu eingerichtet sind/ist, in Abhängigkeit von der zumindest einen mittels der Erfassungseinheit in einem an dem Einsatzwerkzeug angeordneten Zustand der Elektronikvorrichtung erfassten einsatzwerkzeugspezifischen Kenngröße einen Verschleißzustand und/oder ein Fallereignis des Einsatzwerkzeugs zu ermitteln. Es kann vorteilhaft eine besonders flexible und/oder effiziente Verarbeitung, insbesondere Auswertung und/oder Speicherung, der mittels der Erfassungseinheit erfassten zumindest einen einsatzwerkzeugspezifischen Kenngröße ermöglicht werden. Vorteilhaft kann zumindest eine Ermittlung des Verschleißzustands und/oder eines Fallereignisses des Einsatzwerkzeugs räumlich flexibel ausgewertet werden.

Außerdem wird vorgeschlagen, dass das externe Gerät als Handwerkzeugmaschine ausgebildet ist, an der das Einsatzwerkzeug anordenbar ist, wobei zumindest ein Betriebsparameter der Handwerkzeugmaschine in Abhängigkeit von der zumindest einen einsatzwerkzeugspezifischen Kenngröße, von einem ermittelten Verschleißzustand und/oder einem Fallereignis des Einsatzwerkzeugs, automatisch einstellbar ist. Zusätzlich oder alternativ ist auch denkbar, dass zumindest ein Betriebsparameter der Handwerkzeugmaschine in Abhängigkeit von einer ermittelten Identifikation des Einsatzwerkzeugs, vorzugsweise anhand von erfassten Daten zu der zumindest einen einsatzwerkzeugspezifischen Kenngröße, automatisch einstellbar ist. Beispielsweise ist denkbar, dass in Abhängigkeit von einer Auswertung von Daten der zumindest einen einsatzwerkzeugspezifischen Kenngröße, insbesondere in Abhängigkeit von einer ermittelten Identifikation, eines ermittelten Verschleißzustands und/oder eines ermittelten Fallereignisses, die Handwerkzeugmaschine automatisch abschaltbar ist, zumindest ein maximales Drehmoment und/oder eine maximale Betriebsleistung der Handwerkzeugmaschine begrenzbar sind/ist oder eine andere, einem Fachmann als sinnvoll erscheinende Anpassung von Betriebsparametern der Handwerkzeugmaschine automatisch durchführbar ist. Es kann vorteilhaft eine besonders sichere, effiziente und/oder langlebige Nutzung eines Einsatzwerkzeugs unterstützt werden. Es kann vorteilhaft besonders komfortabel eine Langlebigkeit eines Einsatzwerkzeugs erhöht werden.

Ferner wird ein Verfahren zu einem Betrieb des erfindungsgemäßen Elektronikmoduls vorgeschlagen. In zumindest einem Verfahrensschritt wird vorzugsweise zumindest eine einsatzwerkzeugspezifische Kenngröße mittels der Erfassungseinheit erfasst, insbesondere zumindest in einem an dem Einsatzwerkzeug angeordneten Zustand der Elektronikvorrichtung. Es ist denkbar, dass in dem Verfahrensschritt eine Vielzahl unterschiedlicher einsatzwerkzeugspezifischer Kenngrößen mittels der Erfassungseinheit erfasst wird. Es ist denkbar, dass mittels der Erfassungseinheit erfasste Daten zu der zumindest einen einsatzwerkzeugspezifischen Kenngröße oder zu der Vielzahl an einsatzwerkzeugspezifischen Kenngrößen in dem Verfahrensschritt auf der Speichereinheit gespeichert werden. Es ist auch denkbar, dass die mittels der Erfassungseinheit erfassten Daten zu der zumindest einen einsatzwerkzeugspezifischen Kenngröße oder zu der Vielzahl an einsatzwerkzeugspezifischen Kenngrößen vor einem Speichern auf der Speichereinheit gefiltert werden. Alternativ ist auch denkbar, dass die mittels der Erfassungseinheit erfassten Daten zu der zumindest einen einsatzwerkzeugspezifischen Kenngröße oder zu der Vielzahl an einsatzwerkzeugspezifischen Kenngrößen nach einer Übertragung an das externe Gerät auf dem externen Gerät gefiltert und/oder gespeichert werden. In zumindest einem weiteren Verfahrensschritt werden bevorzugt mittels der Erfassungseinheit erfasste Daten zu der zumindest einen einsatzwerkzeugspezifischen Kenngröße oder zu der Vielzahl an einsatzwerkzeugspezifischen Kenngrößen verarbeitet und/oder ausgewertet, vorzugsweise mittels der Steuer- oder Regeleinheit der Elektronikvorrichtung. Vorzugsweise werden in dem weiteren Verfahrensschritt in Abhängigkeit von den mittels der Erfassungseinheit erfassten Daten zu der zumindest einen einsatzwerkzeugspezifischen Kenngröße oder zu der Vielzahl an einsatzwerkzeugspezifischen Kenngrößen, zumindest ein Verschleißzustand des Einsatzwerkzeugs und/oder ein Fallereignis des Einsatzwerkzeugs ermittelt und/oder das Einsatzwerkzeug identifiziert. In zumindest einem zusätzlichen Verfahrensschritt werden insbesondere mittels der Erfassungseinheit erfasste Daten zu der zumindest einen einsatzwerkzeugspezifischen Kenngröße oder zu der Vielzahl an einsatzwerkzeugspezifischen Kenngrößen an das externe Gerätübertragen. Es ist zusätzlich oder alternativ denkbar, dass Informationen zu einem ermittelten Verschleißzustand, einem Fallereignis des Einsatzwerkzeugs und/oder zu einer Identifikation des Einsatzwerkzeugs in dem zusätzlichen Verfahrensschritt an das externe Gerät übertragen werden. Es ist auch denkbar, dass in dem zusätzlichen Verfahrensschritt Informationen zu den erfassten Daten zu der zu der zumindest einen einsatzwerkzeugspezifischen Kenngröße oder zu der Vielzahl an einsatzwerkzeugspezifischen Kenngrößen und/oder zu Auswertungen der Daten, insbesondere zu einem ermittelten Verschleißzustand, einem ermittelten Fallereignis und/oder zu einer Identifikation des Einsatzwerkzeugs ausgegeben werden, insbesondere mittels der Ausgabeeinheit des externen Geräts und/oder der Elektronikvorrichtung. Alternativ ist auch eine andere, einem Fachmann als sinnvoll erscheinende Reihenfolge der Verfahrensschritte denkbar. Insbesondere ist denkbar, dass die Verarbeitung, insbesondere Auswertung von mittels der Erfassungseinheit erfassten Daten zu der zumindest einen einsatzwerkzeugspezifischen Kenngröße oder zu der Vielzahl an einsatzwerkzeugspezifischen Kenngrößen mittels der Steuer- oder Regeleinheit des externen Geräts erfolgt. Vorteilhaft kann ein Zustand eines Einsatzwerkzeugs besonders präzise überwacht werden. Vorteilhaft kann eine Verarbeitung, insbesondere Auswertung, von mittels der Erfassungseinheit erfassten Daten zu der zumindest einen einsatzwerkzeugspezifischen Kenngröße oder zu der Vielzahl an einsatzwerkzeugspezifischen Kenngrößen räumlich und/oder zeitlich besonders flexibel erfolgen.

Das erfindungsgemäße Elektronikmodul, das erfindungsgemäße Einsatzwerkzeugsystem und/oder das erfindungsgemäße Verfahren sollen/soll hierbei nicht auf die oben beschriebene Anwendung und Ausführungsform beschränkt sein.

Insbesondere kann das erfindungsgemäße Elektronikmodul, das erfindungsgemäße Einsatzwerkzeugsystem und/oder das erfindungsgemäße Verfahren zu einer Erfüllung einer hierin beschriebenen Funktionsweise eine von einer hierin genannten Anzahl von einzelnen Elementen, Bauteilen und Einheiten sowie Verfahrensschritten abweichende Anzahl aufweisen. Zudem sollen bei den in dieser Offenbarung angegebenen Wertebereichen auch innerhalb der genannten Grenzen liegende Werte als offenbart und als beliebig einsetzbar gelten.

### Zeichnung

Weitere Vorteile ergeben sich aus der folgenden Zeichnungsbeschreibung. In der Zeichnung sind fünf Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: ein erfindungsgemäßes Einsatzwerkzeugsystem mit einem erfindungsgemäßen Elektronikmodul in einer schematischen Darstellung,
- Fig. 2: das erfindungsgemäße Elektronikmodul in einer Explosionsdarstellung,
- Fig. 3: das erfindungsgemäße Elektronikmodul in einem Querschnitt,
- Fig. 4: einen schematischen Ablauf eines erfindungsgemäßen Verfahrens zu einem Betrieb des erfindungsgemäßen Elektronikmoduls,
- Fig. 5: ein nicht erfindungsgemäßes Elektronikmodul in einer ersten alternativen Ausführung in einer Explosionsdarstellung,
- Fig. 6: ein erfindungsgemäßes Elektronikmodul in einer zweiten alternativen Ausführung in einer schematischen Darstellung,
- Fig. 7: ein erfindungsgemäßes Elektronikmodul in einer dritten alternativen Ausführung an einem Einsatzwerkzeug und
- Fig. 8: ein erfindungsgemäßes Elektronikmodul in einer vierten alternativen Ausführung in einer schematischen Darstellung.

### Beschreibung der Ausführungsbeispiele

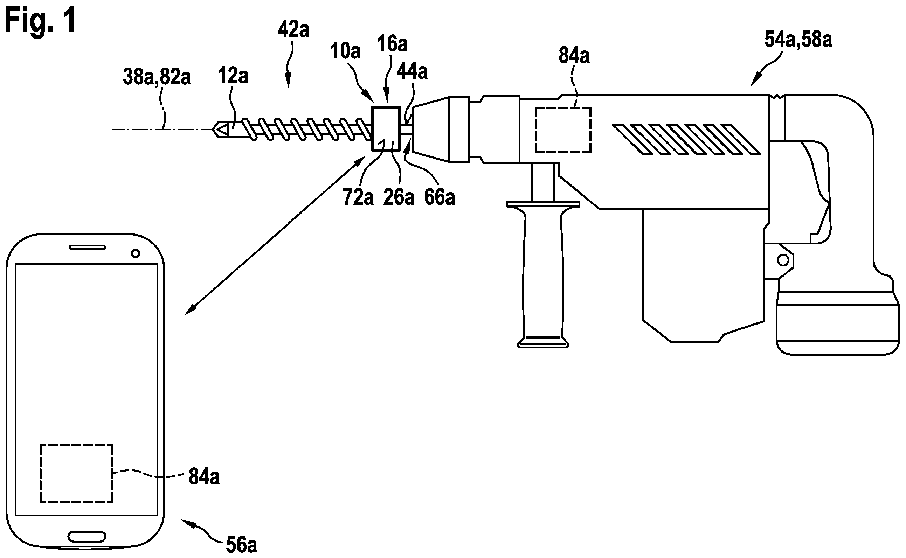

Figur 1 zeigt ein Einsatzwerkzeugsystem 42a mit zumindest einem Einsatzwerkzeug 12a und mit zumindest einem Elektronikmodul 10a für das Einsatzwerkzeug 12a. Das Einsatzwerkzeug 12a ist als Bohrer ausgebildet. Es ist alternativ auch denkbar, dass das Einsatzwerkzeug 12a als Meißel oder ein anderes, einem Fachmann als sinnvoll erscheinendes Einsatzwerkzeug 12a ausgebildet ist. Das Einsatzwerkzeug 12a ist frei von einer speziellen Ausgestaltung, insbesondere frei von einer speziellen Präparation/Modifikation, zu einer Verbindung mit der Haltevorrichtung 16a ausgebildet. Das Einsatzwerkzeug 12a ist ein handelsübliches Einsatzwerkzeug 12a. Das Einsatzwerkzeugsystem 42a umfasst zumindest ein als Handwerkzeugmaschine 58a ausgebildetes externes Gerät 54a (vgl. Figur 1). Alternativ ist denkbar, dass das externe Gerät 54a als Laptop, als Cloudserver, als Smartphone, als Computer oder dergleichen ausgebildet ist. Alternativ oder zusätzlich ist denkbar, dass das Einsatzwerkzeugsystem 42a zumindest ein weiteres externes Gerät 56a umfasst. Das weitere externe Gerät 56a ist als Smartphone ausgebildet. Alternativ ist denkbar, dass das weitere externe Gerät 56a als Laptop, als Cloudserver, als Handwerkzeugmaschine, als Computer oder dergleichen ausgebildet ist. Die Handwerkzeugmaschine 58a ist als Bohrmaschine ausgebildet. Alternativ ist denkbar, dass die Handwerkzeugmaschine 58a als Bohrhammer, als Schlaghammer, als Meißelhammer, oder dergleichen ausgebildet ist. Das Einsatzwerkzeug 12a ist für die Handwerkzeugmaschine 58a vorgesehen. Die Handwerkzeugmaschine 58a umfasst zumindest eine Einsatzwerkzeugaufnahme 66a, in oder an der das Einsatzwerkzeug 12a befestigbar ist. Es ist denkbar, dass das Einsatzwerkzeug 12a durch die Handwerkzeugmaschine 58a, insbesondere zu einer Rotation um eine Längsachse 38a des Einsatzwerkzeugs 12a, antreibbar ist. Die Handwerkzeugmaschine 58a ist dazu eingerichtet ist, das Einsatzwerkzeug 12a zu einer Rotationsbewegung, insbesondere um die Längsachse 38a des Einsatzwerkzeugs 12a, anzutreiben. Zusätzlich oder alternativ ist denkbar, dass die Handwerkzeugmaschine 58a ein Schlagwerk umfasst, um das Einsatzwerkzeug 12a in einem Schlagbetrieb anzutreiben. Ein durch das Schlagwerk erzeugter Schlag auf das Einsatzwerkzeug 12a erfolgt bevorzugt entlang der Längsachse 38a des Einsatzwerkzeugs 12a. Das Einsatzwerkzeug 12a weist einen runden Querschnitt auf. Es ist jedoch auch denkbar, dass das Einsatzwerkzeug 12a einen polygonalen Querschnitt aufweist.

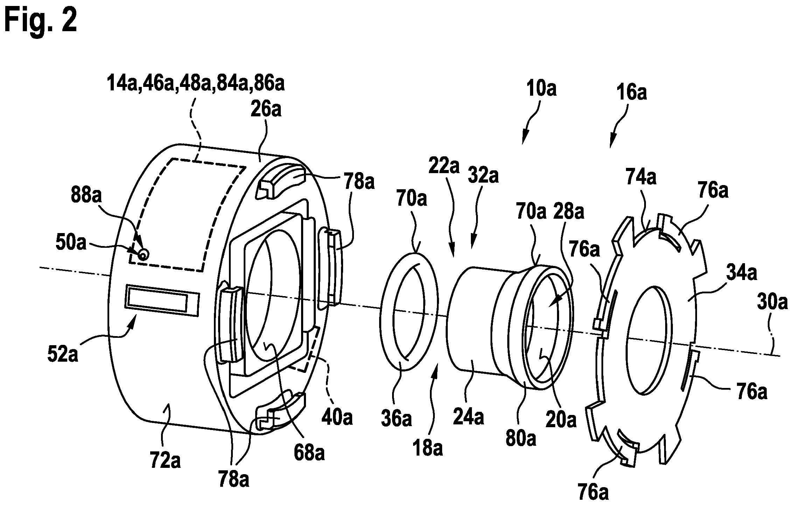

Figur 2 zeigt das Elektronikmodul 10a in einer Explosionsdarstellung. Das Elektronikmodul 10a umfasst zumindest eine Elektronikvorrichtung 14a zu einem Verarbeiten und/oder Erfassen von einsatzwerkzeugspezifischen Kenngrößen. Das Elektronikmodul 10a umfasst zumindest eine Haltevorrichtung 16a zu einer lösbaren Halterung der Elektronikvorrichtung 14a an dem Einsatzwerkzeug 12a. Die Haltevorrichtung 16a umfasst zumindest eine Einsatzwerkzeugschnittstelle 18a. Die Einsatzwerkzeugschnittstelle 18a weist zumindest eine Kontaktfläche 20a auf, die in einem an dem Einsatzwerkzeug 12a angeordneten Zustand der Haltevorrichtung 16a in, insbesondere direktem, Kontakt mit dem Einsatzwerkzeug 12a ist. Das Elektronikmodul 10a umfasst zumindest eine Dämpfungseinheit 22a zu einem Dämpfen von auf die Elektronikvorrichtung 14a einwirkenden Schwingungen. Das Einsatzwerkzeug 12a ist zumindest in einem an dem Einsatzwerkzeug 12a angeordneten Zustand des Elektronikmoduls 10a, zumindest betrachtet entlang einer Umfangsrichtung des Einsatzwerkzeugs 12, zumindest im Wesentlichen vollständig von der Dämpfungseinheit 22a und der Haltevorrichtung 16a umschlossen. Die Umfangsrichtung des Einsatzwerkzeugs 12a verläuft in einer zu der Längsachse 38, insbesondere Rotationsachse, des Einsatzwerkzeugs 12a senkrecht verlaufenden Ebene. Die Längsachse 38a, insbesondere die Rotationsachse, entspricht vorzugsweise einer Haupterstreckungsachse 82a des Einsatzwerkzeugs 12a.

Die Dämpfungseinheit 22a bildet zumindest teilweise die Einsatzwerkzeugschnittstelle 18a. Die Dämpfungseinheit 22a ist dazu vorgesehen, von dem Einsatzwerkzeug 12a auf ein Gehäuse 26a der Haltevorrichtung 16a, in dem die Elektronikvorrichtung 14a angeordnet ist, einwirkende Schwingungen zu dämpfen. Die Dämpfungseinheit 22a ist dazu vorgesehen, eine Übertragung von am Einsatzwerkzeug 12a auftretenden Beschleunigungen auf das Gehäuse 26a, insbesondere die Elektronikvorrichtung 14a, zu dämpfen, vorzugsweise um zumindest 50%, bevorzugt um zumindest 75%, besonders bevorzugt um zumindest 90% und ganz besonders bevorzugt um zumindest 99%. Die Dämpfungseinheit 22a ist derart ausgebildet, dass ein Dämpfen von auf die Elektronikvorrichtung 14a einwirkenden Schwingungen erfolgt, wobei gleichzeitig einsatzwerkzeugspezifische Kenngrößen mittels der Elektronikvorrichtung 14a erfassbar sind. Die Dämpfungseinheit 22a ist dazu vorgesehen, einer Übertragung von Wärme von dem Einsatzwerkzeug 12a auf das Gehäuse 26a, insbesondere die Elektronikvorrichtung 14a, entgegenzuwirken. Die Dämpfungseinheit 22a ist dazu vorgesehen, eine Relativbewegung, insbesondere zumindest eine axiale Relativbewegung, der Elektronikvorrichtung 14a zu dem Einsatzwerkzeug 12a in einem an dem Einsatzwerkzeug 12a angeordneten Zustand der Haltevorrichtung 16a zu ermöglichen. Die Dämpfungseinheit 22a ist dazu vorgesehen, eine Relativbewegung, insbesondere zumindest eine axiale Relativbewegung, des Gehäuses 26a der Haltevorrichtung 16azu dem Einsatzwerkzeug 12a in einem an dem Einsatzwerkzeug 12a angeordneten Zustand der Haltevorrichtung 16a zu ermöglichen. Die Dämpfungseinheit 22a ist dazu vorgesehen, eine Relativbewegung, insbesondere zumindest eine axiale Relativbewegung, des Gehäuses 26a, insbesondere der Elektronikvorrichtung 14a, zu dem Einsatzwerkzeug 12a in einem an dem Einsatzwerkzeug 12a angeordneten Zustand zu ermöglichen, sodass eine von dem Gehäuse 26a umschlossene Außenfläche 44a des Einsatzwerkzeugs 12a variiert. Die Kontaktfläche 20a der Einsatzwerkzeugschnittstelle 18a, die in einem an dem Einsatzwerkzeug 12a angeordneten Zustand der Haltevorrichtung 16a in direktem Kontakt mit dem Einsatzwerkzeug 12a ist, ist zumindest teilweise von der Dämpfungseinheit 22a gebildet. Die Kontaktfläche 20a der Einsatzwerkzeugschnittstelle 18a, die in einem an dem Einsatzwerkzeug 12a angeordneten Zustand der Haltevorrichtung 16a in direktem Kontakt mit dem Einsatzwerkzeug 12a ist, ist zumindest im Wesentlichen vollständig durch die Dämpfungseinheit 22a gebildet. Die Dämpfungseinheit 22a liegt in einem an dem Einsatzwerkzeug 12a angeordneten Zustand des Elektronikmoduls 10a unmittelbar an dem Einsatzwerkzeug 12a, insbesondere an einer Außenfläche 44a des Einsatzwerkzeugs 12a, an. Die Kontaktfläche 20a liegt in einem an dem Einsatzwerkzeug 12a angeordneten Zustand der Haltevorrichtung 16a an der Außenfläche 44a des Einsatzwerkzeugs 12a an. Die Dämpfungseinheit 22a umfasst zumindest ein Dämpfungselement 24a. Das Dämpfungselement 24a ist aus einem Elastomer, insbesondere aus Gummi, gebildet. Das Dämpfungselement 24a ist als Schrumpfschlauch ausgebildet. Es ist auch denkbar, dass zumindest das eine Dämpfungselement 24a als ein O-Ring, als ein O-Ring-Segment, als ein Hohlzylinder, als ein Hohlzylinderteil, insbesondere eine Hohlzylinderhälfte, oder dergleichen ausgebildet. Es ist alternativ auch denkbar, dass das Dämpfungselement 24a als Feder, Textil oder dergleichen ausgebildet ist. Das Dämpfungselement 24a bildet zumindest teilweise die Kontaktfläche 20a der Einsatzwerkzeugschnittstelle 18a. Das Dämpfungselement 24a ist lösbar mit der Haltevorrichtung 16a, insbesondere dem Gehäuse 26a der Haltevorrichtung 16a, verbunden. Das Dämpfungselement 24a liegt ohne spezielle Befestigung an dem Gehäuse 26a der Haltevorrichtung 16a an. Das Dämpfungselement 24a ist kraftschlüssig oder formschlüssig mit dem Gehäuse 26a verbunden. Mittels der Haltevorrichtung 16a ist die Elektronikvorrichtung 14a zerstörungsfrei lösbar an dem Einsatzwerkzeug 12a befestigbar. Die Haltevorrichtung 16a, die zu einer lösbaren Halterung der Elektronikvorrichtung 14a an dem Einsatzwerkzeug 12a vorgesehen ist, ist zu einem mehrmaligen Lösen/Befestigen der Elektronikvorrichtung 14a und/oder des Gehäuses 26a von/an dem Einsatzwerkzeug 12a und/oder von/an einem anderen Einsatzwerkzeug eingerichtet.

Die Dämpfungseinheit 22a, vorzugsweise zumindest das eine Dämpfungselement 24a, ist mittels des Gehäuses 26a in einem an dem Einsatzwerkzeug 12a angeordneten Zustand der Haltevorrichtung 16a, zwischen dem Gehäuse 26a und dem Einsatzwerkzeug 12a einspannbar, verklemmbar und/oder fixierbar. Die Haltevorrichtung 16a ist dazu vorgesehen, die Elektronikvorrichtung 14a auf der Außenfläche 44a des Einsatzwerkzeugs 12a lösbar zu befestigen. Die Haltevorrichtung 16a umfasst zumindest eine Halteeinheit 32a, die zu einem Befestigen und/oder Lösen des Einsatzwerkzeugs 12a an/von der Einsatzwerkzeugschnittstelle 18a in einem durch die Dämpfungseinheit 22a zumindest teilweise begrenzten Aufnahmebereich 28a für das Einsatzwerkzeug 12a vorgesehen ist.

Die Dämpfungseinheit 22a weist zumindest ein Dämpfungselement 24a auf, das zumindest eine kreisringsegmentartige Ausgestaltung aufweist und die Kontaktfläche 20a der Einsatzwerkzeugschnittstelle 18a bildet. Alternativ ist denkbar, dass das Dämpfungselement 24a eine würfelartige, plattenförmige Ausgestaltung oder dergleichen aufweist. Eine Kontur der Kontaktfläche 20a entspricht einer Kontur der Außenfläche 44a des Einsatzwerkzeugs 12a, an der die Haltevorrichtung 16a, insbesondere die Kontaktfläche 20a des zumindest einen Dämpfungselements 24a, in einem an dem Einsatzwerkzeug 12a angeordneten Zustand der Haltevorrichtung 16a anliegt. Die durch das zumindest eine Dämpfungselement 24a zumindest teilweise gebildete Kontaktfläche 20a ist gekrümmt. Eine Krümmung der Kontaktfläche 20a entspricht einer Krümmung der Außenfläche 44a des Einsatzwerkzeugs 12a. Es ist auch denkbar, dass die durch das zumindest eine Dämpfungselement 24a gebildete Kontaktfläche 20a eben, insbesondere krümmungsfrei, verläuft, insbesondere bei einem Einsatzwerkzeug 12a, das in einem Bereich an dem die Elektronikvorrichtung 14a anordenbar ist, einen polygonalen Querschnitt aufweist. Das Dämpfungselement 24a weist einen Querschnitt auf, der einem ganzen Kreisring entspricht. Es ist auch denkbar, dass das Dämpfungselement 24a derart ausgebildet ist, dass ein Querschnitt des Dämpfungselements 24a einem Kreisringsegment entspricht.

Die Haltevorrichtung 16a umfasst zumindest ein Gehäuse 26a, in dem die Elektronikvorrichtung 14a angeordnet ist. Die Dämpfungseinheit 22a, insbesondere zumindest das die Kontaktfläche 20a der Einsatzwerkzeugschnittstelle 18 bildende Dämpfungselement 24a der Dämpfungseinheit 22a, ist in einem an dem Einsatzwerkzeug 12a angeordneten Zustand der Haltevorrichtung 16a an einer dem Einsatzwerkzeug 12a zugewandten Seite des Gehäuses 26a angeordnet. Das Gehäuse 26a weist einen Querschnitt auf, der zumindest in einem an dem Einsatzwerkzeug 12a angeordneten Zustand der Haltevorrichtung 16a einem Kreisring entspricht. Das Gehäuse 26a weist zumindest eine innere Gehäuseaußenfläche 68a auf, die in einem an dem Einsatzwerkzeug 12a angeordneten Zustand der Haltevorrichtung 16a an der dem Einsatzwerkzeug 12a zugewandten Seite des Gehäuses 26a ausgebildet ist. Die Dämpfungseinheit 22a, insbesondere zumindest das Dämpfungselement 24a und /oder ein weiteres Dämpfungselement 36a, liegt/liegen zumindest in einem Betriebszustand an der inneren Gehäuseaußenfläche 68a an. Das Dämpfungselement 24a und/ oder das weitere Dämpfungselement 36a weisen/weist zumindest eine Gehäusekontaktfläche 70a auf, an der das Gehäuse 26a, insbesondere die innere Gehäuseaußenfläche 68a, zumindest in einem Betriebszustand anliegt. Eine Kontur der Gehäusekontaktfläche 70a entspricht einer Kontur der inneren Gehäuseaußenfläche 68a, an der die Gehäusekontaktfläche 70a zumindest in einem Betriebszustand anliegt. Es ist denkbar, dass die Gehäusekontaktfläche 70a und/oder die innere Gehäuseaußenfläche 68a zumindest teilweise eine runde und/oder eine polygonale Kontur aufweisen/aufweist. Das Gehäuse 26a weist eine äußere Gehäuseaußenfläche 72a auf, die an einer Seite des Gehäuses 26a angeordnet ist, die der Seite des Gehäuses 26a, an der die innere Gehäuseaußenfläche 68a angeordnet ist, abgewandt ist. Eine Kontur der äußeren Gehäuseaußenfläche 72a ist rund. Es ist auch denkbar, dass eine Kontur der äußeren Gehäuseaußenfläche 72a zumindest teilweise rund, oval und/oder polygonal ist. Es ist denkbar, dass die äußere Gehäuseaußenfläche 72a eine rechteckige, insbesondere quadratische, Kontur aufweist.

Die Einsatzwerkzeugschnittstelle 18a, insbesondere die Dämpfungseinheit 22a, umgibt einen Aufnahmebereich 28a für das Einsatzwerkzeug 12a zumindest teilweise. Die Haltevorrichtung 16a und die Dämpfungseinheit 22a weisen zumindest in einem Betriebszustand einen gemeinsamen Massenschwerpunkt auf und/oder eine Mittelachse 30a des Aufnahmebereichs 28a schneidet einen Massenschwerpunkt der Haltevorrichtung 16a und der Dämpfungseinheit 22a, zumindest betrachtet in einer zur Mittelachse 30a senkrecht verlaufenden Ebene. Die Haltevorrichtung 16a und die Dämpfungseinheit 22a weisen in einem Betriebszustand zumindest einen gemeinsamen Massenschwerpunkt auf und/oder die Mittelachse 30a des Aufnahmebereichs 28a schneidet einen Massenschwerpunkt der Haltevorrichtung 16a und einen Massenschwerpunkt der Dämpfungseinheit 22a, zumindest betrachtet in einer zu der Mittelachse 30a senkrechten verlaufenden Ebene, um einen Unwuchtsausgleich bei einem in einem Betriebszustand rotierend und/oder schlagend angetriebenen Einsatzwerkzeug 12a zu erreichen. Die Längsachse 38a des Einsatzwerkzeugs 12a verläuft zumindest in einem an dem Einsatzwerkzeug 12a angeordneten Zustand der Haltevorrichtung 16a zumindest im Wesentlichen parallel zu der Mittelachse 30a des Aufnahmebereichs 28a. Der Aufnahmebereich 28a ist vollständig von der Dämpfungseinheit 22a umgeben, zumindest betrachtet entlang einer Umfangsrichtung des Aufnahmebereichs 28a. Die Umfangsrichtung des Aufnahmebereichs 28a verläuft insbesondere in einer Ebene, die senkrecht zu der Mittelachse 30a des Aufnahmebereichs 28a verläuft. Es ist auch denkbar, dass der Aufnahmebereich 28a teilweise von der Dämpfungseinheit 22a umgeben ist, insbesondere zumindest betrachtet entlang der Umfangsrichtung des Aufnahmebereichs 28a. Der Aufnahmebereich 28a ist, zumindest entlang der Umfangsrichtung des Aufnahmebereichs 28a, vollständig durch die Dämpfungseinheit 22a begrenzt. Die Dämpfungseinheit 22a und/oder die Haltevorrichtung 16a sind/ist symmetrisch um die Mittelachse 30a des Aufnahmebereichs 28a angeordnet, zumindest hinsichtlich einer Gewichtsverteilung und/oder einer räumlichen Ausdehnung.

Die Haltevorrichtung 16a umfasst zumindest eine Halteeinheit 32a, die zum werkzeuglosen Befestigen und/oder Lösen des Einsatzwerkzeugs 12a an/von der Einsatzwerkzeugschnittstelle 18a in dem durch die Dämpfungseinheit 22a zumindest teilweise begrenzten Aufnahmebereich 28a für das Einsatzwerkzeug 12a vorgesehen ist. Die Halteeinheit 32a ist als Bajonettverschluss ausgebildet. Das Einsatzwerkzeug 12a ist an/von der Einsatzwerkzeugschnittstelle 18a in dem durch die Dämpfungseinheit 22a zumindest teilweise begrenzten Aufnahmebereich 28a frei von einer Werkzeugnutzung befestigbar/lösbar. Die Halteeinheit 32a ist dazu eingerichtet, zu einem Lösen und/oder Befestigen von Hand, insbesondere frei von einem zusätzlichen Werkzeug, betätigt zu werden. Das Einsatzwerkzeug 12a ist mittels der Halteeinheit 32a von Hand an/von der Einsatzwerkzeugschnittstelle 18a in dem Aufnahmebereich 28a für das Einsatzwerkzeug 12a befestigbar/lösbar. Mittels der Halteeinheit 32a und/oder der Dämpfungseinheit sind Einsatzwerkzeuge 12a unterschiedlicher Größe, insbesondere unterschiedlicher Durchmesser, an der Einsatzwerkzeugschnittstelle 18a in dem Aufnahmebereich 28a befestigbar. Zumindest über eine Materialdicke des zumindest einen Dämpfungselements 24a, welches insbesondere die Kontaktfläche 20a zumindest teilweise bildet, ist ein maximaler Durchmesser des Aufnahmebereichs 28a variierbar. Zusätzlich oder alternativ ist denkbar, dass die Halteeinheit 32a zur Befestigung von Einsatzwerkzeugen 12a unterschiedlicher Größen, insbesondere unterschiedlicher Durchmesser, verstellbar ausgebildet ist. Beispielsweise ist denkbar, dass die Halteeinheit 32a derart verstellbar ausgebildet ist, dass ein maximaler Durchmesser des Aufnahmebereichs 28a für das Einsatzwerkzeug 12a variierbar ist, insbesondere zumindest in einer als Ratschenverschluss, Schraubverschluss und/oder Bügelverschluss ausgebildeten Ausführung der Halteeinheit 32a. Eine Haltekraft des Einsatzwerkzeugs 12a an der Einsatzwerkzeugschnittstelle 18a in dem Aufnahmebereich 28a ist über die Halteeinheit 32a und/oder die Dämpfungseinheit 22a einstellbar. Die Haltekraft des Einsatzwerkzeugs 12a an der Einsatzwerkzeugschnittstelle 18a in dem Aufnahmebereich 28a ist beispielsweise zumindest über eine Materialwahl, insbesondere Elastizität und/oder Härte, eine Materialdicke oder dergleichen des Dämpfungselements 24a und/oder des weiteren Dämpfungselements 36a anpassbar. Zumindest ein Teil des Bajonettverschlusses ist an dem Gehäuse 26a angeordnet. Der Bajonettverschluss ist zumindest teilweise einstückig mit dem Gehäuse 26a ausgebildet. Der Bajonettverschluss ist dazu vorgesehen, das Gehäuse 26a zumindest axial mit der Dämpfungseinheit 22a zu verspannen. Die Dämpfungseinheit 22a ist in einem geschlossenen Zustand des Bajonettverschlusses, insbesondere auch in einem von dem Einsatzwerkzeug 12a gelösten Zustand der Haltevorrichtung 16a, verliersicher an und/oder in der Haltevorrichtung 16a angeordnet. Der Bajonettverschluss umfasst zumindest einen metallenen Verschlussring 34a. Alternativ ist auch denkbar, dass der Verschlussring 34a aus einem Kunststoff oder dergleichen gebildet ist. Der Verschlussring 34a weist zumindest an/auf einer Ringaußenfläche 74a vier Formschlusselemente 76a auf. Es ist alternativ auch eine von vier verschiedene Anzahl von Formschlusselementen 76a denkbar. Die Ringaußenfläche 74a verläuft zumindest im Wesentlichen parallel zu der inneren Gehäuseaußenfläche 68a, zu der äußeren Gehäuseaußenfläche 72a und/oder zu der Mittelachse 30a des Aufnahmebereichs 28a, insbesondere zumindest in einem Betriebszustand. Die Formschlusselemente 76a sind als Vorsprünge ausgebildet. Der Bajonettverschluss umfasst vier weitere Formschlusselemente 78a. Es ist alternativ auch denkbar, dass der Bajonettverschluss eine von vier verschiedene Anzahl an weiteren Formschlusselementen 78a aufweist. Die vier Formschlusselemente 78a sind an dem Gehäuse 26a angeordnet sind, insbesondere einstückig mit dem Gehäuse 26a ausgebildet. Die vier weiteren Formschlusselemente 78a sind als Vorsprungsaufnahmen ausgebildet. Es ist auch denkbar, dass die vier Formschlusselemente 76a als Vorsprungsaufnahmen und die vier weiteren Formschlusselemente 78a als Vorsprünge ausgebildet sind. Die Formschlusselemente 76a des Verschlussrings 34a sind dazu vorgesehen, zu einer Befestigung des Verschlussrings 34a an dem Gehäuse 26a, mit den vier weiteren Formschlusselementen 78a zusammenzuwirken. Die als Vorsprungsaufnahmen ausgebildeten weiteren Formschlusselemente 78a sind dazu vorgesehen, die als Vorsprünge ausgebildeten Formschlusselemente 76a zu einer Befestigung des Verschlussrings 34a an dem Gehäuse 26a aufzunehmen. Der Bajonettverschluss ist bei einem entsprechenden axialen Abstand zwischen dem Gehäuse 26a und dem Verschlussring 34a, durch eine Drehung des Verschlussrings 34a relativ zu dem Gehäuse 26a verschließbar, insbesondere durch eine Drehung um die Längsachse 38a. Das Gehäuse 26a ist zumindest teilweise aus einem Kunststoff und/oder zumindest teilweise aus einem Metall gebildet ist.

Besonders bevorzugt ist das Gehäuse 26a zumindest im Wesentlichen vollständig aus einem Kunststoff gebildet.

Das als Schrumpfschlauch ausgebildete Dämpfungselement 24a ist dazu vorgesehen, an dem Einsatzwerkzeug 12a, insbesondere an der Außenfläche 44a des Einsatzwerkzeugs 12a, angebracht zu werden. Das als Schrumpfschlauch ausgebildete Dämpfungselement 24a ist dazu vorgesehen, mittels eines heißen Luftstroms an dem Einsatzwerkzeug 12a, insbesondere an der Außenfläche 44a des Einsatzwerkzeugs 12a, angebracht zu werden. Das als Schrumpfschlauch ausgebildete Dämpfungselement 24a umfasst beispielsweise eine Klebeschicht, die insbesondere dazu vorgesehen ist, bei einer Befestigung des Dämpfungselements 24a an dem Einsatzwerkzeug 12a aufgeschmolzen zu werden. Die Klebeschicht ist vorzugsweise mittels eines heißen Luftstroms und/oder durch eine zuvor erzeugte Erwärmung des Einsatzwerkzeugs 12a aufschmilzbar. An einer äußeren Seite des als Schrumpfschlauch ausgebildeten Dämpfungselements 24a, an der die Gehäusekontaktfläche 70a angeordnet ist, ist eine Erhebung 80a, insbesondere ein Randsteg, ausgebildet. Die Erhebung 80a erstreckt sich vollständig entlang einer Umfangsrichtung des Dämpfungselements 24a. Die Umfangsrichtung des als Schrumpfschlauch ausgebildeten Dämpfungselements 24a verläuft in einer zu der Mittelachse 30 des Aufnahmebereichs 28a senkrecht verlaufenden Ebene. Alternativ ist auch denkbar, dass sich die Erhebung 80a teilweise, beispielsweise abschnittsweise, entlang einer Umfangsrichtung des Dämpfungselements 24a erstreckt. Die Erhebung 80a ist dazu vorgesehen, zumindest eine Axialbewegung des Gehäuses 26a relativ zu dem als Schrumpfschlauch ausgebildeten Dämpfungselement 24a und/oder dem Einsatzwerkzeug 12a zumindest in einem Betriebszustand zumindest teilweise zu begrenzen und/oder zu dämpfen.

Die Dämpfungseinheit 22a umfasst zumindest ein weiteres als O-Ring ausgebildetes Dämpfungselement 36a. Das als O-Ring ausgebildete weitere Dämpfungselement 36a umschließt zumindest in einem Betriebszustand das als Schrumpfschlauch ausgebildete Dämpfungselement 24a, zumindest betrachtet entlang der Umfangsrichtung des Dämpfungselements 24a. Das als Schrumpfschlauch ausgebildete Dämpfungselement 24a und/oder das als O-Ring ausgebildete weitere Dämpfungselement 36a sind/ist zumindest in einem Betriebszustand, insbesondere in einem geschlossenen Zustand des Bajonettverschlusses, auf einer dem Aufnahmebereich 28a zugewandten Seite des Gehäuses 26a angeordnet, besonders bevorzugt verliersicher angeordnet. Das als O-Ring ausgebildete weitere Dämpfungselement 36a ist zumindest in einem Betriebszustand zwischen dem als Schrumpfschlauch ausgebildeten Dämpfungselement 24a und dem Gehäuse 26a angeordnet. Ein maximaler Durchmesser eines durch die innere Gehäuseaußenfläche 68a gebildeten Bereichs ist zumindest an einer Stelle kleiner als ein maximaler Außendurchmesser des als O-Ring ausgebildeten weiteren Dämpfungselements 36a. Das als O-Ring ausgebildete weitere Dämpfungselement 36a ist dazu vorgesehen, zumindest eine Axialbewegung des Gehäuses 26a relativ zu dem als O-Ring ausgebildeten weiteren Dämpfungselement 36a und/oder dem Einsatzwerkzeug 12a zumindest in einem Betriebszustand zumindest teilweise zu begrenzen und/oder zu dämpfen. Das als O-Ring ausgebildete weitere Dämpfungselement 36a ist zu einer Dämpfung und/oder Begrenzung einer Axialbewegung des Gehäuses 26a relativ zu dem Einsatzwerkzeug 12a in zumindest einem Betriebszustand dazu vorgesehen, mit dem als Schrumpfschlauch ausgebildeten Dämpfungselement 24a, insbesondere der Erhebung 80a, und/oder einer Gehäuseaußenfläche des Gehäuses 26a zusammenzuwirken.

Die Dämpfungseinheit 22a bildet derart die Einsatzwerkzeugschnittstelle 18a aus, dass die Dämpfungseinheit 22a in einem an der Einsatzwerkzeugschnittstelle 18a angeordneten Zustand des Einsatzwerkzeugs 12a zumindest zur Dämpfung von auf die Elektronikvorrichtung 14a wirkenden Schwingungen vorgesehen ist, die durch entlang einer Längsachse 38a, insbesondere Rotationsachse, des Einsatzwerkzeugs 12a wirkende Stöße oder Schläge des Einsatzwerkzeugs 12a hervorrufbar sind. Die Elektronikvorrichtung 14a und/oder das Gehäuse 26a sind/ist über die Dämpfungseinheit 22a und die Halteeinheit 32a derart an dem Einsatzwerkzeug 12a befestigbar, dass, insbesondere bei einem Auftreten von Stößen und/oder Schlägen auf das Einsatzwerkzeug 12a, die Haltevorrichtung 16a, insbesondere das Gehäuse 26a, und/oder die Elektronikvorrichtung 14a relativ zu dem Einsatzwerkzeug 12a zumindest axial, insbesondere parallel zu der Längsachse 38a und/oder der Mittelachse 30a, bewegbar sind/ist. Die axiale Bewegbarkeit der Haltevorrichtung 16a, insbesondere des Gehäuses 26a, und/oder der Elektronikvorrichtung 14a relativ zu dem Einsatzwerkzeug 12a in einem an dem Einsatzwerkzeug 12a angeordneten Zustand der Haltevorrichtung 16a ist über die durch die Dämpfungseinheit 22a und/oder die Halteeinheit 32a erzeugbare Haltekraft anpassbar.

Die Elektronikvorrichtung 14a weist zumindest eine Erfassungseinheit 48a auf, die dazu vorgesehen ist, zumindest eine werkzeugspezifische Kenngröße, insbesondere zumindest zu einer Ermittlung eines Verschleißzustands und/oder eines Fallereignisses des Einsatzwerkzeugs 12a, aktiv zu erfassen. Die Erfassungseinheit 48a umfasst eine Vielzahl an unterschiedlichen Sensoren, um insbesondere eine Vielzahl unterschiedlicher einsatzwerkzeugspezifischer Kenngrößen zu erfassen. Es ist jedoch auch denkbar, dass die Erfassungseinheit 48a lediglich einen Sensor umfasst, um eine einsatzwerkzeugspezifische Kenngröße des Einsatzwerkzeugs 12a zu erfassen. Die Erfassungseinheit 48a umfasst beispielsweise zumindest einen Temperatursensor, einen Bewegungssensor, einen optischen Sensor, einen akustischen Sensor, eine Lokalisierungssensorik, einen Feuchtigkeitssensor und/oder dergleichen. Die zumindest eine einsatzwerkzeugspezifische Kenngröße ist beispielsweise als Temperaturkenngröße, als Bewegungskenngröße, als optische Kenngröße, als Akustikkenngröße, als Positionskenngröße, Feuchtigkeitskenngröße oder dergleichen ausgebildet. Die Elektronikvorrichtung 14a, das externe Gerät 54a und/oder das weitere externe Gerät 56a weisen/weist eine Steuer- oder Regeleinheit 84a zu einer Verarbeitung von mittels der Erfassungseinheit 48a erfassten Daten zu der zumindest einen einsatzwerkzeugspezifischen Kenngröße auf. Die Steuer- oder Regeleinheit/en 84a umfassen/umfasst zumindest eine, insbesondere kabellose und/oder kabellose, Kommunikationsschnittstelle, die vorzugsweise zumindest zu einer Aktualisierung des Betriebsprogramms nutzbar ist. Es ist denkbar, dass die Steuer- oder Regeleinheit/en 84a zumindest teilweise auf künstlicher Intelligenz basieren/t und insbesondere zu einem maschinellen Lernen eingerichtet sind/ist. Beispielsweise verarbeiten/t die Steuer- oder Regeleinheit/en 84a mittels der Erfassungseinheit 48a erfasste Daten zumindest teilweise mittels eines selbstlernenden Algorithmus. Zwischen der Elektronikvorrichtung 14a und dem externen Gerät 54a und/oder dem weiteren externen Gerät 56a übertragbar, insbesondere über eine Kommunikationseinheit 86a der Elektronikvorrichtung 14a. Es ist denkbar, dass die Kommunikationseinheit 86a zu einem kabellosen und/oder kabelgebundenen Datenaustausch eingerichtet ist. Die Kommunikationseinheit 86a umfasst beispielsweise ein WLAN-Modul, ein Bluetooth-Low-Energy-Modul, ein Zigbee-Modul oder ein anderes, einem Fachmann als sinnvoll erscheinendes Kommunikationsmodul. Vorzugsweise sind die Bauteile und/oder Einheiten der Elektronikvorrichtung 14a zumindest teilweise, bevorzugt größtenteils, insbesondere zumindest die Erfassungseinheit 48a, die Kommunikationseinheit 86a und/oder die Steuer- oder Regeleinheit 84a, an/auf einer gemeinsamen Leiterplatte angeordnet. Die zumindest eine einsatzwerkzeugspezifische Kenngröße ist dazu vorgesehen, zu einer Ermittlung eines Verschleißzustands und/oder eines Fallereignisses des Einsatzwerkzeugs 12a mittels der Steuer- oder Regeleinheit 84a der Elektronikvorrichtung 14a, des externen Geräts 54a und/oder des weiteren externen Geräts 56a ausgewertet zu werden. Vorzugsweise sind/ist in Abhängigkeit von der zumindest einen einsatzwerkzeugspezifischen Kenngröße ein Verschleißzustand und/oder ein Fallereignis des Elektronikmoduls 10a, insbesondere der Elektronikvorrichtung 14a, ermittelbar, insbesondere mittels zumindest einer der Steuer- oder Regeleinheiten 84a. Die Steuer- oder Regeleinheit/en 84a sind/ist insbesondere dazu eingerichtet, aus mittels der Erfassungseinheit 48a ermittelten Daten zu der zumindest einen einsatzwerkzeugspezifischen Kenngröße zumindest eine Nutzungscharakteristik des Einsatzwerkzeugs 12a, beispielsweise eine Nutzungsdauer, eine Nutzungsart, eine Nutzungsanzahl, insbesondere eine Bohrlochanzahl oder dergleichen, eine Nutzungsintensität oder dergleichen, zu ermitteln. Es ist auch denkbar, dass die Steuer- oder Regeleinheit/en 84a dazu eingerichtet sind/ist, anhand von mittels der Erfassungseinheit 48a erfassten Daten zu der zumindest einen einsatzwerkzeugspezifischen Kenngröße, insbesondere mittels Algorithmen, beispielsweise eine Bohrzeit, eine Bohrlochanzahl oder dergleichen zu berechnen und zu akkumulieren. Beispielsweise erfolgt eine Berechnung/Akkumulation einer Nutzungscharakteristik, insbesondere der Bohrzeit und der Bohrlochanzahl, durch die Steuer- oder Regeleinheit/en 84a mittels eines gleitenden Mittelwerts, einer Hüllkurve von erfassten Werten der zumindest einen einsatzwerkzeugspezifischen Kenngröße, insbesondere der erfassten Beschleunigungswerte, und/oder einer Verwendung selektiver Amplitudenwerte, wobei Amplituden insbesondere mittels eines RMS-Wertes umrechenbar sind. Eine Ermittlung eines Fallereignisses, insbesondere eines Freifallereignisses, des Einsatzwerkzeugs 12a basiert vorzugsweise auf einem Algorithmus, der eine Veränderung einer Beschleunigung des Einsatzwerkzeugs 12a in Bezug auf die Erdbeschleunigung detektiert, wobei erfasste Beschleunigungswerte vorzugsweise mittels eines RMS-Wertes umrechenbar sind, sodass insbesondere ein gleitender Mittelwert bildbar ist und mit einem, vorzugsweise auf einer Datenbank hinterlegten, Wertebereich, insbesondere einem Schwellwert, vergleichbar ist. Die Steuer- oder Regeleinheit/en 84a der Elektronikvorrichtung 14a, des externen Geräts 54a und/oder des weiteren externen Geräts 56a sind/ist dazu eingerichtet, in Abhängigkeit von mittels der Erfassungseinheit 48a erfassten Daten zu der zumindest einen einsatzwerkzeugspezifischen Kenngröße, insbesondere in Abhängigkeit von der zumindest einen Nutzungscharakteristik, einen Verschleißzustand des Einsatzwerkzeugs 12a, ein Fallereignis des Einsatzwerkzeugs 12a oder dergleichen zu ermitteln. Es ist auch denkbar, dass in Abhängigkeit von mittels der Erfassungseinheit 48a erfassten Daten zu der zumindest einen einsatzwerkzeugspezifischen Kenngröße, insbesondere in Abhängigkeit von der zumindest einen Nutzungscharakteristik, von dem Verschleißzustand und/oder von ermittelten Fallereignissen eine automatische Bestellung und/oder Lieferung von Ersatzteilen oder dergleichen durchführbar ist, beispielsweise durch eine Übertragung der erfassten und/oder ausgewerteten Daten an ein, beispielsweise als Cloudserver ausgebildete, externes Gerät mittels der Kommunikationseinheit 86a. Ferner ist denkbar, dass in Abhängigkeit von mittels der Erfassungseinheit 48a erfassten Daten zu der zumindest einen einsatzwerkzeugspezifischen Kenngröße, insbesondere in Abhängigkeit von der zumindest einen Nutzungscharakteristik, ein Material des von dem Einsatzwerkzeug 12a bearbeiteten Werkstücks ermittelbar ist, vorzugsweise mittels zumindest einer der Steuer- oder Regeleinheit/en 84a. Vorzugsweise ist die Erfassungseinheit 48a verschieden von Sendermodul ausgebildet, das dazu eingerichtet ist, bereits auf einem Speicher des Sendemoduls hinterlegte einsatzwerkzeugspezifische Daten, auszusenden und/oder zu übertragen. Insbesondere ist die Erfassungseinheit 48a verschieden von einem RFID-Tag ausgebildet, der dazu eingerichtet ist, eine bereits hinterlegte Kennung des Einsatzwerkzeugs 12a auszusenden und/oder zu übertragen.

Die Elektronikvorrichtung 14a umfasst zumindest eine Identifikationseinheit 46a zu einer Identifikation des Einsatzwerkzeugs 12a. Es ist denkbar, dass die Identifikationseinheit 46a der Elektronikvorrichtung 14a als RFID-Tag ausgebildet ist. Es ist auch denkbar, dass die Identifikationseinheit 46a durch die Erfassungseinheit 48a gebildet ist, wobei die Erfassungseinheit 48a dazu eingerichtet ist, eine als Identifikationskenngröße des Einsatzwerkzeugs 12a ausgebildete einsatzwerkzeugspezifische Kenngröße aktiv zu erfassen. Es ist denkbar, dass die als Identifikationskenngröße ausgebildete einsatzwerkzeugspezifische Kenngröße dazu vorgesehen ist, zu einer Identifikation des Einsatzwerkzeugs 12a ausgewertet zu werden, insbesondere mittels zumindest einer der Steuer- oder Regeleinheiten 84a. Es ist denkbar, dass dem Einsatzwerkzeug 12a durch eine Identifikation ein digitales Datenblatt zuordenbar ist. Das digitale Datenblatt umfasst beispielsweise eine Produktkennung, eine Einsatzwerkzeugart, ein Einsatzwerkzeugdurchmesser, eine Herstellerinformation, ein Herstellungsdatum, ein Einsatzwerkzeugmaterial oder dergleichen. Vorzugsweise sind Informationen zu einer Identifikation des Einsatzwerkzeugs 12a, an dem die Elektronikvorrichtung 14a angeordnet ist auf/von einer Speichereinheit (nicht näher dargestellt) der Elektronikvorrichtung speicherbar/abrufbar.

Die Erfassungseinheit 48a umfasst zumindest einen Temperatursensor, der dazu vorgesehen ist, zumindest eine als Temperaturkenngröße des Einsatzwerkzeugs 12a ausgebildete einsatzwerkzeugspezifische Kenngröße in einem an dem Einsatzwerkzeug 12a angeordneten Zustand der Elektronikvorrichtung 14a, insbesondere zumindest zu einer Ermittlung eines Verschleißzustands des Einsatzwerkzeugs 12a, zu erfassen. Vorzugsweise ist die Temperaturkenngröße eine Temperatur des Einsatzwerkzeugs 12a. Es ist auch denkbar, dass die Temperaturkenngröße beispielsweise eine Rotationsgeschwindigkeit oder dergleichen ist, aus der eine Temperatur des Einsatzwerkzeugs 12a und/oder der Elektronikvorrichtung 14a ermittelbar ist, bevorzugt mittels zumindest einer der Steuer- oder Regeleinheiten 84a. Der Temperatursensor ist beispielsweise als Heißleiter, Kaltleiter, als integrierter Halbleiter-Temperatursensor, als Diode, als Temperaturfühler mit Schwingquarz, als Thermoelement oder als ein anderer, einem Fachmann als sinnvoll erscheinender Temperatursensor ausgebildet. Zu einer Erfassung einer als Rotationsgeschwindigkeit oder dergleichen ausgebildeten Temperaturkenngröße ist der Temperatursensor vorzugsweise als ein einem Fachmann als sinnvoll erscheinender Geschwindigkeitssensor oder Beschleunigungssensor ausgebildet. Zusätzlich ist denkbar, dass der Temperatursensor dazu eingerichtet, eine Temperaturkenngröße der Elektronikvorrichtung 14a zu erfassen. Es ist denkbar, dass eine Temperaturkenngröße, insbesondere eine Temperatur, der Elektronikvorrichtung 14a in Abhängigkeit von der als Temperaturkenngröße des Einsatzwerkzeugs 12a ausgebildeten einsatzwerkzeugspezifischen Kenngröße ermittelbar ist, insbesondere mittels zumindest einer der Steuer- oder Regeleinheiten 84a. Insbesondere ist anhand von erfassten Daten zu der als Temperaturkenngröße ausgebildeten einsatzwerkzeugspezifischen Kenngröße ein Temperaturgradient mittels zumindest einer der Steuer- oder Regeleinheiten 84a ermittelbar. Beispielsweise sind in Abhängigkeit von dem ermittelten Temperaturgradienten Informationen zu einer Verwendung des Einsatzwerkzeugs 12a, zu dem mittels des Einsatzwerkzeugs 12a bearbeiteten Werkstücks, insbesondere einem Material des bearbeiteten Werkstücks, und/oder eine Dauer eines Bearbeitungsvorgangs mit dem Einsatzwerkzeug 12a, insbesondere eines Bohrvorgangs oder dergleichen, ermittelbar, insbesondere mittels zumindest einer der Steuer- oder Regeleinheiten 84a.

Die Erfassungseinheit 48a umfasst zumindest einen Bewegungssensor (nicht näher dargestellt), der dazu vorgesehen ist, zumindest eine als Bewegungskenngröße des Einsatzwerkzeugs 12a ausgebildete einsatzwerkzeugspezifische Kenngröße in einem an dem Einsatzwerkzeug 12a angeordneten Zustand der Elektronikvorrichtung 14a, insbesondere zumindest zu einer Ermittlung eines Verschleißzustands und/oder eines Fallereignisses des Einsatzwerkzeugs 12a, zu erfassen. Die Bewegungskenngröße kann beispielsweise eine Beschleunigung, eine Rotationsgeschwindigkeit, eine Vibration, eine Lage/Orientierung oder dergleichen des Einsatzwerkzeugs 12a sein. Der Bewegungssensor ist beispielsweise als MEMS-Sensor, als Piezo-Sensor oder als ein anderer, einem Fachmann als sinnvoll erscheinender Bewegungssensor ausgebildet. Beispielsweise ist ein als Beschleunigungssensor ausgebildeter Bewegungssensor dazu eingerichtet, insbesondere zumindest in einem an dem Einsatzwerkzeug 12a angeordneten Zustand der Elektronikvorrichtung 14a, vorzugsweise mit einer bestimmten Abtastrate, bei einer Nutzung des Einsatzwerkzeugs 12a entstehende Beschleunigungsamplituden, bevorzugt in allen drei Raumrichtungen zu erfassen Beispielsweise ist zumindest in Abhängigkeit von einer als Beschleunigung ausgebildeten Beschleunigungskenngröße ein Fallereignis des Einsatzwerkzeugs 12a ermittelbar, insbesondere mittels zumindest einer der Steuer-oder Regeleinheiten 84a. Es ist auch denkbar, dass anhand von mittels des Bewegungssensors ermittelten Daten zu der zumindest einen Bewegungskenngröße eine Anzahl von durchgeführten Bohrungen, eine Betriebszeit des Einsatzwerkzeugs 12a oder dergleichen ermittelbar ist, wobei insbesondere in Abhängigkeit davon ein Verschleißzustand des Einsatzwerkzeugs 12a ermittelbar ist, besonders bevorzugt mittels zumindest einer der Steuer- oder Regeleinheiten 84a. Vorzugsweise ist in Abhängigkeit von der als Beschleunigungskenngröße ausgebildeten einsatzwerkzeugspezifischen Kenngröße eine unsachgemäße Nutzung des Einsatzwerkzeugs 12a, beispielsweise auftretende Stöße oder dergleichen, ermittelbar, insbesondere mittels zumindest einer der Steuer- oder Regeleinheiten 84a.

Die Erfassungseinheit 48a umfasst beispielsweise zumindest einen optischen Sensor, der dazu vorgesehen ist, zumindest eine als optische Kenngröße des Einsatzwerkzeugs 12a ausgebildete einsatzwerkzeugspezifische Kenngröße zumindest in einem an dem Einsatzwerkzeug 12a angeordneten Zustand der Elektronikvorrichtung 14a zu erfassen. Es ist denkbar, dass der optische Sensor dazu vorgesehen ist, zumindest die als optische Kenngröße ausgebildete einsatzwerkzeugspezifische Kenngröße des Einsatzwerkzeugs 12a zumindest in einem an dem Einsatzwerkzeug 12a angeordneten Zustand der Elektronikvorrichtung 14a zumindest zu einer Identifikation des Einsatzwerkzeugs 12a und/oder zu einer Ermittlung eines Verschleißzustands des Einsatzwerkzeugs 12a zu erfassen. Die optische Kenngröße ist vorzugsweise ein optisches Signal, beispielsweise sichtbares Licht, Infrarotstrahlung, UV-Strahlung oder dergleichen. Es ist denkbar, dass der optische Sensor als Radarsensor, als LIDAR-Sensor, als SAR-Sensor, als Lasersensor, als Kamerasensor oder als ein anderer, einem Fachmann als sinnvoll erscheinender optischer Sensor ausgebildet ist. Es ist denkbar, dass mittels des optischen Sensors erfasste Daten, insbesondere zumindest zu der als optische Kenngröße ausgebildeten einsatzwerkzeugspezifische Kenngröße, in einem bildgebenden Verfahren verarbeitbar sind, vorzugsweise mittels zumindest einer der Steuer- oder Regeleinheiten 84a. Vorzugsweise ist der optische Sensor dazu vorgesehen, einen an dem Einsatzwerkzeug 12a angeordneten Identifikationscode, beispielsweise einen alpha-nummerischen Code, einen Barcode, einen QR-Code oder dergleichen, zu erfassen. Insbesondere ist das Einsatzwerkzeug 12a in Abhängigkeit von dem mittels des optischen Sensors erfassten, an dem Einsatzwerkzeug 12a angeordneten, Identifikationscode identifizierbar, vorzugsweise mittels zumindest einer der Steuer- oder Regeleinheiten 84a. Es ist auch denkbar, dass das Einsatzwerkzeug 12a anhand von mittels des optischen Sensors erfassten Daten zu der zumindest einen optischen Kenngröße, die insbesondere in einem bildgebenden Verfahren verarbeitet wurden, identifizierbar ist, vorzugsweise mittels zumindest einer der Steuer- oder Regeleinheiten 84a. Es ist denkbar, dass die mittels des optischen Sensors erfassten Daten zu der zumindest einen optischen Kenngröße mit einer Datenbank, vorzugsweise mittels zumindest einer der Steuer- oder Regeleinheiten 84a, abgleichbar sind, wobei auf der Datenbank vorzugsweise zumindest Referenzdaten zu der optischen Kenngröße, die insbesondere einem neuwertigen Einsatzwerkzeug 12a entsprechen, abgelegt sind. Bevorzugt ist aufgrund des Abgleichs ein Verschleißzustand des Einsatzwerkzeugs 12a ermittelbar. Zusätzlich oder alternativ ist denkbar, dass die Erfassungseinheit 48a, insbesondere der optische Sensor, dazu eingerichtet ist, einen an der Handwerkzeugmaschine 58a, insbesondere an oder in der Einsatzwerkzeugaufnahme 66a, angeordneten Zustand automatisch zu erkennen. Es ist denkbar, dass ein Befestigungszeitpunkt des Einsatzwerkzeugs 12a an der Handwerkzeugmaschine 58a gespeichert wird. Es ist auch denkbar, dass eine Befestigungsdauer des Einsatzwerkzeugs 12a an der Handwerkzeugmaschine 58a und/oder ein Lösen des Einsatzwerkzeugs 12a von der Einsatzwerkzeugmaschine 58a mittels der Erfassungseinheit 48a, vorzugsweise automatisch, erfassbar ist und insbesondere durch die Elektronikvorrichtung 14a, insbesondere auf der Speichereinheit der Elektronikvorrichtung 14a, speicherbar ist.

Die Erfassungseinheit 48a umfasst beispielsweise zumindest einen akustischen Sensor, der dazu vorgesehen ist, zumindest eine als Akustikkenngröße des Einsatzwerkzeugs 12a ausgebildete einsatzwerkzeugspezifische Kenngröße in einem an dem Einsatzwerkzeug 12a angeordneten Zustand der Elektronikvorrichtung 14a, insbesondere zu einer Ermittlung eines Verschleißzustands des Einsatzwerkzeugs 12a, zu erfassen. Vorzugsweise ist die als Akustikkenngröße ausgebildete einsatzwerkzeugspezifische Kenngröße ein durch das Einsatzwerkzeug 12a in einem Betrieb erzeugtes Akustiksignal, insbesondere eine Frequenz und/oder eine Lautstärke. Vorzugsweise ist anhand der als Akustikkenngröße ausgebildeten einsatzwerkzeugspezifischen Kenngröße ein Verschleißzustand des Einsatzwerkzeugs 12a ermittelbar, bevorzugt mittels zumindest einer der Steuer- oder Regeleinheiten 84a. Es ist denkbar, dass die mittels des akustischen Sensors erfassten Daten zu der zumindest einen Akustikkenngröße mit einer Datenbank, auf der vorzugsweise zumindest Referenzdaten zu der Akustickenngröße abgelegt sind, die einem neuwertigen Einsatzwerkzeug 12a entsprechen, mittels zumindest einer der Steuer- oder Regeleinheiten 84a abgleichbar sind. Besonders bevorzugt ist aufgrund des Abgleichs ein Verschleißzustand des Einsatzwerkzeugs 12a ermittelbar. Der akustische Sensor ist beispielsweise als Mikrofon, als Ultraschallsensor oder als ein anderer, einem Fachmann als sinnvoll erscheinender akustischer Sensor ausgebildet.

Die Erfassungseinheit 48a umfasst beispielsweise zumindest eine Lokalisierungssensorik, die dazu eingerichtet ist, eine als Positionskenngröße des Einsatzwerkzeugs 12a ausgebildete einsatzwerkzeugspezifische Kenngröße in einem an dem Einsatzwerkzeug 12a angeordneten Zustand der Elektronikvorrichtung 14a, insbesondere flächendeckend, zu erfassen, insbesondere in Echtzeit zu tracken. Die Lokalisierungssensorik ist insbesondere dazu eingerichtet, beispielsweise mittels GPS, Bluetooth-Low-Energy, UWB, WLAN, Zigbee oder dergleichen, eine Position des Einsatzwerkzeugs 12a in einem an dem Einsatzwerkzeug 12a angeordneten Zustand der Elektronikvorrichtung 14a zu erfassen. Insbesondere ist die Lokalisierungssensorik dazu eingerichtet, die Positionskenngröße, insbesondere die Position, des Einsatzwerkzeugs 12a flächendeckend und/oder in Echtzeit zu tracken. Es ist auch denkbar, dass eine Position des Einsatzwerkzeugs 12a in einem an dem Einsatzwerkzeug 12a angeordneten Zustand der Elektronikvorrichtung 14a mittels Fingerprinting, Gateways oder dergleichen erfassbar ist. Beispielsweise ist eine Position des Einsatzwerkzeugs 12a in einem an dem Einsatzwerkzeug 12a angeordneten Zustand der Elektronikvorrichtung 14a mittels der Lokalisierungssensorik über ein Smartphone, insbesondere das weitere externe Gerät 56a, oder dergleichen überwachbar. Vorzugsweise ist die Lokalisierungssensorik verschieden von einem RFID-Tag ausgebildet. Es ist jedoch alternativ oder zusätzlich auch denkbar, dass eine Position des Einsatzwerkzeugs 12a mittels eines RFID-Tags oder dergleichen erfassbar ist. Es ist denkbar, dass die mittels der Lokalisierungssensorik erfassten Daten zu der Positionskenngröße zu einer Ermittlung eines Verschleißzustands auswertbar sind, vorzugsweise mittels zumindest einer der Steuer- oder Regeleinheiten 84a. Beispielsweise ist anhand der Positionskenngröße eine unsachgemäße Lagerung, insbesondere eine zu feuchte, kalte, heiße Lagerung, des Einsatzwerkzeugs 12a und/oder der Elektronikvorrichtung 14a ermittelbar.Die Speichereinheit ist dazu eingerichtet, mittels der Erfassungseinheit 48a erfasste Daten zu der zumindest einen einsatzwerkzeugspezifischen Kenngröße zumindest teilweise, insbesondere automatisch, abzuspeichern.

Die Speichereinheit ist beispielsweise als SSD, als RAM oder dergleichen ausgebildet. Vorzugsweise ist Elektronikvorrichtung 14a dazu eingerichtet, die zumindest eine einsatzspezifische Kenngröße kontinuierlich zu erfassen oder in Zeitabständen automatisch zu erfassen. Bevorzugt sind die Zeitabstände, in denen die Erfassungseinheit 48a die zumindest eine einsatzwerkzeugspezifische Kenngröße erfasst, einstellbar, vorzugsweise über zumindest eine der Steuer- oder Regeleinheiten 84a. Es ist denkbar, dass die Zeitabstände stufenlos oder stufenartig einstellbar sind. Es ist auch denkbar, dass zwischen einer kontinuierlichen Erfassung und einer Erfassung in Zeitabständen gewechselt werden kann. Beispielsweise umfasst das externe Gerät 54a, das weitere externe Gerät 56a und/oder die Elektronikvorrichtung 14a zumindest eine Eingabeeinheit. Es ist denkbar, dass Einstellungen der Elektronikvorrichtung 14a, insbesondere der Erfassungseinheit 48a und/oder der Steuer- oder Regeleinheit 84a, über die Eingabeeinheit durch einen Nutzer einstellbar sind. Es ist denkbar, dass die Eingabeeinheit an dem Gehäuse 26a angeordnet ist. Es ist auch denkbar, dass über die Eingabeeinheit Informationen zu dem Einsatzwerkzeug 12a, an dem die Elektronikvorrichtung 14a angeordnet ist, eingebbar sind, insbesondere zumindest zu einer manuellen Identifikation/Zuordnung des Einsatzwerkzeugs 12a. Die Eingabeeinheit ist beispielsweise als Tastenfeld, als Einstellrad, als Touchscreen oder als eine andere, einem Fachmann als sinnvoll erscheinende Eingabeeinheit ausgebildet. Es ist auch denkbar, dass die Eingabeeinheit der Elektronikvorrichtung 14a eine kabellose oder kabelgebundene Kommunikationsschnittstelle umfasst, über die Informationen, beispielsweise über das weitere externe Gerät 56a, eingebbar sind. Es ist auch denkbar, dass die Kommunikationsschnittstelle der Eingabeeinheit von der Kommunikationseinheit 86a gebildet ist. Es ist auch denkbar, dass die Erfassungseinheit 48a dazu eingerichtet ist, die zumindest eine einsatzwerkzeugspezifische Kenngröße lediglich in einem Antriebszustand des Einsatzwerkzeugs 12a zu erfassen. Beispielsweise ist ein Antriebszustand über die Kommunikationseinheit 86a von dem externen Gerät 54a, insbesondere der Handwerkzeugmaschine 58a, an die Elektronikvorrichtung 14a, insbesondere die Steuer- oder Regeleinheit 84a und/oder die Erfassungseinheit 48a, kommunizierbar. Es ist auch denkbar, dass ein Antriebszustand des Einsatzwerkzeugs 12a durch die Erfassungseinheit 48a erfassbar ist. Vorzugsweise ist die Speichereinheit dazu eingerichtet, mittels der Erfassungseinheit 48a erfasste Daten zu der zumindest einen einsatzwerkzeugspezifischen Kenngröße kontinuierlich automatisch zu speichern. Es ist denkbar, dass die Speichereinheit als Ringspeicher ausgebildet ist oder dazu vorgesehen ist, die mittels der Erfassungseinheit 48a erfassten Daten dauerhaft zu speichern. Vorzugsweise sind auf der Speichereinheit gespeicherte Daten von zumindest einer der Steuer- oder Regeleinheiten 84a auslesbar.

Die Elektronikvorrichtung 14a ist dazu eingerichtet, Daten zu der zumindest einen mittels der Erfassungseinheit 48a in einem an dem Einsatzwerkzeug 12a angeordneten Zustand der Elektronikvorrichtung 14a erfassten einsatzwerkzeugspezifischen Kenngröße vor einem Abspeichern und/oder Übertragen zu filtern. Vorzugsweise sind/ist die Steuer- oder Regeleinheit/en 84a dazu eingerichtet, die mittels der Erfassungseinheit 48a erfassten Daten zu der zumindest einen einsatzwerkzeugspezifischen Kenngröße mit einem Anti-Alias-Filter oder dergleichen zu filtern. Es ist denkbar, dass die Erfassungseinheit 48a derart einstellbar ist, dass die Erfassungseinheit 48a Daten zu der zumindest einen einsatzwerkzeugspezifischen Kenngröße lediglich erfasst, wenn diese in einem gewissen Wertebereich liegen. Es ist auch denkbar, dass die Speichereinheit dazu eingerichtet ist, mittels der Erfassungseinheit 48a erfasste Daten abzuspeichern, wenn diese in dem eingestellten Wertebereich liegen. Es ist denkbar, dass auf einer Datenbank, die vorzugsweise auf der Speichereinheit der Elektronikvorrichtung 14a, dem externen Gerät 54a und/oder dem weiteren externen Gerät 56a hinterlegt ist, ein Wertebereich für die zumindest eine einsatzwerkzeugspezifische Kenngröße hinterlegt ist, in Abhängigkeit von dem insbesondere die Erfassungseinheit 48a Daten zu der zumindest einen einsatzwerkzeugspezifischen Kenngröße erfasst und/oder in Abhängigkeit von dem die Speichereinheit mittels der Erfassungseinheit 48a erfasste Daten zu der zumindest einen einsatzwerkzeugspezifischen Kenngröße abspeichert. Vorzugsweise ist der Wertebereich derart einstellbar, dass zu einer Ermittlung eines Verschleißzustands, eines Fallereignisses und/oder einer Identifikation des Einsatzwerkzeugs 12a relevante Werte zu der zumindest einen einsatzwerkzeugspezifischen Kenngröße erfassbar und/oder speicherbar sind.

Die Elektronikvorrichtung 14a umfasst zumindest eine Ausgabeeinheit 52a. Alternativ ist auch denkbar, dass die Elektronikvorrichtung 14a frei von einer Ausgabeeinheit 52 ausgebildet ist. Die Ausgabeeinheit 52a ist zumindest dazu vorgesehen, in Abhängigkeit von der zumindest einen mittels der Erfassungseinheit 48a einsatzwerkzeugspezifischen Kenngröße, insbesondere in Abhängigkeit von der zumindest einen Nutzungscharakteristik, eine Information auszugeben. Vorzugsweise ist die Ausgabeeinheit 52a an dem Gehäuse 26a angeordnet. Alternativ oder zusätzlich ist auch denkbar, dass an dem externen Gerät 54a und/oder an dem weiteren externen Gerät 56a eine Ausgabeeinheit 52a angeordnet ist. Die Ausgabeeinheit 52a kann beispielsweise als ein Bildschirm, als ein Lautsprecher, als eine Beleuchtungseinheit, insbesondere LEDs oder dergleichen, als ein Lasermodul oder dergleichen ausgebildet sein. Die Information umfasst vorzugsweise zumindest eine Handlungsanweisung und/oder einen Verwendungshinweis. Die Information kann beispielsweise auch die zumindest eine Nutzungscharakteristik, einen Verschleißzustand des Einsatzwerkzeugs 12a, Betriebsdaten des Einsatzwerkzeugs 12a, Informationen zu Fallereignissen des Einsatzwerkzeugs 12a, Beschädigungsinformationen, eine Arbeitsunterstützungsinformation oder dergleichen umfassen. Beispielsweise ist einem Nutzer in Abhängigkeit von einer Identifikation des Einsatzwerkzeugs 12a mittels der Identifikationseinheit 46a, insbesondere der Erfassungseinheit 48a, eine Information zu Einsatzmöglichkeiten des Einsatzwerkzeugs 12a, eine Bedienungsanleitung, Garantiebedingungen, Handlungsanweisungen oder dergleichen ausgebbar, insbesondere zumindest über die Ausgabeeinheit 52a der Elektronikvorrichtung 14a, das externe Gerät 54a und/oder das weitere externe Gerät 56a. Ferner ist denkbar, dass ein Nutzer in Abhängigkeit von mittels der Erfassungseinheit 48a erfassten Daten zu der zumindest einen einsatzwerkzeugspezifischen Kenngröße, insbesondere in Abhängigkeit von der zumindest einen Nutzungscharakteristik, bei einem Bestellvorgang unterstützt/beraten werden kann, insbesondere über die Ausgabeeinheit 52a der Elektronikvorrichtung, das externe Gerät 54a und/oder das weitere externe Gerät 56a. Es ist auch denkbar, dass über die Ausgabeeinheit 52a der Elektronikvorrichtung 14a, das externe Gerät 54a und/oder das weitere externe Gerät 56a ein Händlerstandort, ein Preis eines Einsatzwerkzeugs 12a oder dergleichen ausgebbar ist. Es ist denkbar, dass die Elektronikvorrichtung 14a zumindest eine Arbeitsbeleuchtungseinheit umfasst (nicht näher dargestellt), die dazu vorgesehen ist, zumindest einen Arbeitsbereich des Einsatzwerkzeugs 12a zu beleuchten. Die Arbeitsbeleuchtungseinheit ist vorzugsweise an dem Gehäuse 26a angeordnet. Es ist denkbar, dass die Arbeitsbeleuchtungseinheit lösbar an dem Gehäuse 26a befestigbar ist oder fest mit dem Gehäuse 26a verbunden ist. Die Arbeitsbeleuchtungseinheit umfasst vorzugsweise zumindest eine LED, einen Laser oder dergleichen. Es ist denkbar, dass die Arbeitsbeleuchtungseinheit zumindest teilweise durch die Ausgabeeinheit 52a der Elektronikvorrichtung 14a gebildet ist.

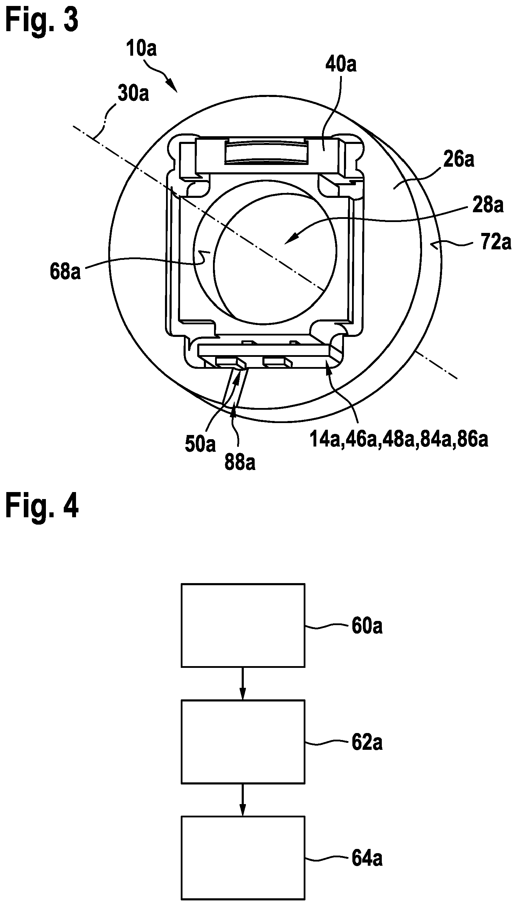

Die Elektronikvorrichtung 14a umfasst zumindest eine Energiespeichereinheit 40a (vgl. Figur 3). Die Energiespeichereinheit 40a ist dazu vorgesehen, zumindest die Erfassungseinheit 48a mit elektrischer Energie zu versorgen. Elektrische Kontakte zwischen der Erfassungseinheit 48a und der Energiespeichereinheit 40a sind zumindest teilweise verlötet. Bevorzugt sind sämtliche elektrische Kontakte zwischen der Energiespeichereinheit 40a und der Erfassungseinheit 48a verlötet. Es ist alternativ auch denkbar, dass zumindest die elektrischen Kontakte zwischen der Erfassungseinheit 48a und der Energiespeichereinheit 40a frei von Lötstellen sind. Die Energiespeichereinheit 40a ist beispielsweise als Akkumulator, als Batterie oder dergleichen ausgebildet. Die Energiespeichereinheit 40a ist in dem Gehäuse 26a angeordnet. Die Elektronikvorrichtung 14a, insbesondere die Energiespeichereinheit 40a, umfasst bevorzugt zumindest einen Ladeanschluss 50a, mittels dem die Energiespeichereinheit 40a aufladbar ist. Die Energiespeichereinheit 40a ist auf einer Seite des Gehäuses 26a angeordnet, die einer Seite, an der zumindest die Erfassungseinheit 48a und/oder die Steuer- oder Regeleinheit 84a angeordnet sind/ist, gegenüberliegt, zumindest ausgehend von der Mittelachse 30a des Aufnahmebereichs 28a aus betrachtet. Es kann vorteilhaft eine besonders zuverlässige Erfassung von der zumindest einen einsatzwerkzeugspezifischen Kenngröße gewährleistet werden.

Zumindest die Erfassungseinheit 48a ist von dem Gehäuse 26a der Haltevorrichtung 16a umspritzt. Es ist denkbar, dass die Elektronikvorrichtung 14a zumindest im Wesentlichen vollständig umspritzt ist. Es ist alternativ auch denkbar, dass zumindest die Energiespeichereinheit 40a austauschbar an dem Gehäuse 26a angeordnet ist. Die Elektronikvorrichtung 14a, insbesondere zumindest die Erfassungseinheit 48a und/oder die Energiespeichereinheit 40a, ist/sind durch ein Mehrkomponentenspritzgussverfahren oder ein Koextrusionsverfahren von dem Gehäuse 26a umspritzt, besonders bevorzugt vollständig. Das Gehäuse 26a weist zumindest eine Ausnehmung 88a auf, sodass zumindest ein Ladekabel mit dem Ladeanschluss 50a zu einem Aufladen der Energiespeichereinheit 40a verbindbar ist.

Es ist denkbar, dass zumindest ein Betriebsparameter der Handwerkzeugmaschine 58a in Abhängigkeit von der zumindest einen einsatzwerkzeugspezifischen Kenngröße, insbesondere von einem ermittelten Verschleißzustand und/oder einem Fallereignis des Einsatzwerkzeugs 12a, automatisch einstellbar ist. Zusätzlich oder alternativ ist auch denkbar, dass zumindest ein Betriebsparameter der Handwerkzeugmaschine 58a in Abhängigkeit von einer ermittelten Identifikation des Einsatzwerkzeugs 12a, vorzugsweise anhand von erfassten Daten zu der zumindest einen einsatzwerkzeugspezifischen Kenngröße, automatisch einstellbar ist. Beispielsweise ist denkbar, dass in Abhängigkeit von einer Auswertung von Daten der zumindest einen einsatzwerkzeugspezifischen Kenngröße, insbesondere in Abhängigkeit von einer ermittelten Identifikation, eines ermittelten Verschleißzustands und/oder eines ermittelten Fallereignisses, die Handwerkzeugmaschine 58a automatisch abschaltbar ist, zumindest ein maximales Drehmoment und/oder eine maximale Betriebsleistung der Handwerkzeugmaschine 58a begrenzbar sind/ist oder eine andere, einem Fachmann als sinnvoll erscheinende Anpassung von Betriebsparametern der Handwerkzeugmaschine 58a automatisch durchführbar ist.

In Figur 4 ist ein schematischer Ablauf eines Verfahrens zu einem Betrieb des Elektronikmoduls 10a dargestellt. In zumindest einem Verfahrensschritt 60 wird zumindest eine einsatzwerkzeugspezifische Kenngröße mittels der Erfassungseinheit 48a erfasst, insbesondere zumindest in einem an dem Einsatzwerkzeug 12a angeordneten Zustand der Elektronikvorrichtung 14a. Es ist denkbar, dass in dem Verfahrensschritt 60a eine Vielzahl unterschiedlicher einsatzwerkzeugspezifischer Kenngrößen mittels der Erfassungseinheit 48a erfasst wird. Es ist denkbar, dass mittels der Erfassungseinheit 48a erfasste Daten zu der zumindest einen einsatzwerkzeugspezifischen Kenngröße oder zu der Vielzahl an einsatzwerkzeugspezifischen Kenngrößen in dem Verfahrensschritt 60 auf der Speichereinheit gespeichert werden. Es ist auch denkbar, dass die mittels der Erfassungseinheit 48a erfasste Daten zu der zumindest einen einsatzwerkzeugspezifischen Kenngröße oder zu der Vielzahl an einsatzwerkzeugspezifischen Kenngrößen vor einem Speichern auf der Speichereinheit gefiltert werden. Alternativ ist auch denkbar, dass die mittels der Erfassungseinheit 48a erfassten Daten zu der zumindest einen einsatzwerkzeugspezifischen Kenngröße oder zu der Vielzahl an einsatzwerkzeugspezifischen Kenngrößen nach einer Übertragung an das externe Gerät 54a und/oder das weitere externe Gerät 56a auf dem externen Gerät 54a bzw. dem weiteren externen Gerät 56a gefiltert und/oder gespeichert werden. In zumindest einem weiteren Verfahrensschritt 62a werden mittels der Erfassungseinheit 48a erfasste Daten zu der zumindest einen einsatzwerkzeugspezifischen Kenngröße oder zu der Vielzahl an einsatzwerkzeugspezifischen Kenngrößen verarbeitet und/oder ausgewertet, vorzugsweise mittels der Steuer- oder Regeleinheit 84a der Elektronikvorrichtung 14a. Vorzugsweise werden in dem weiteren Verfahrensschritt 62a in Abhängigkeit von den mittels der Erfassungseinheit 48a erfassten Daten zu der zumindest einen einsatzwerkzeugspezifischen Kenngröße oder zu der Vielzahl an einsatzwerkzeugspezifischen Kenngrößen, zumindest ein Verschleißzustand des Einsatzwerkzeugs 12a und/oder ein Fallereignis des Einsatzwerkzeugs 12a ermittelt und/oder das Einsatzwerkzeug 12a identifiziert. In zumindest einem zusätzlichen Verfahrensschritt 64a werden insbesondere mittels der Erfassungseinheit 48a erfasste Daten zu der zumindest einen einsatzwerkzeugspezifischen Kenngröße oder zu der Vielzahl an einsatzwerkzeugspezifischen Kenngrößen an das externe Gerät 54a und/oder das weitere externe Gerät 56a übertragen. Es ist zusätzlich oder alternativ denkbar, dass Informationen zu einem ermittelten Verschleißzustand, einem Fallereignis des Einsatzwerkzeugs 12a und/oder zu einer Identifikation des Einsatzwerkzeugs 12a in dem zusätzlichen Verfahrensschritt 64a an das externe Gerät 54a und/oder das weitere externe Gerät 56a übertragen werden. Es ist auch denkbar, dass in dem zusätzlichen Verfahrensschritt 64 Informationen zu den erfassten Daten zu der zu der zumindest einen einsatzwerkzeugspezifischen Kenngröße oder zu der Vielzahl an einsatzwerkzeugspezifischen Kenngrößen und/oder zu Auswertungen der Daten, insbesondere zu einem ermittelten Verschleißzustand, einem ermittelten Fallereignis und/oder zu einer Identifikation des Einsatzwerkzeugs 12a ausgegeben werden, insbesondere mittels der Ausgabeeinheit 52a des externen Geräts 54a, des weiteren externen Geräts 56a und/oder der Elektronikvorrichtung 14a. Alternativ ist auch eine andere, einem Fachmann als sinnvoll erscheinende Reihenfolge der Verfahrensschritte denkbar. Insbesondere ist denkbar, dass die Verarbeitung, insbesondere Auswertung von mittels der Erfassungseinheit 48a erfassten Daten zu der zumindest einen einsatzwerkzeugspezifischen Kenngröße oder zu der Vielzahl an einsatzwerkzeugspezifischen Kenngrößen mittels der Steuer- oder Regeleinheit 84a des externen Geräts 54a und/oder des weiteren externen Geräts 56a erfolgt.

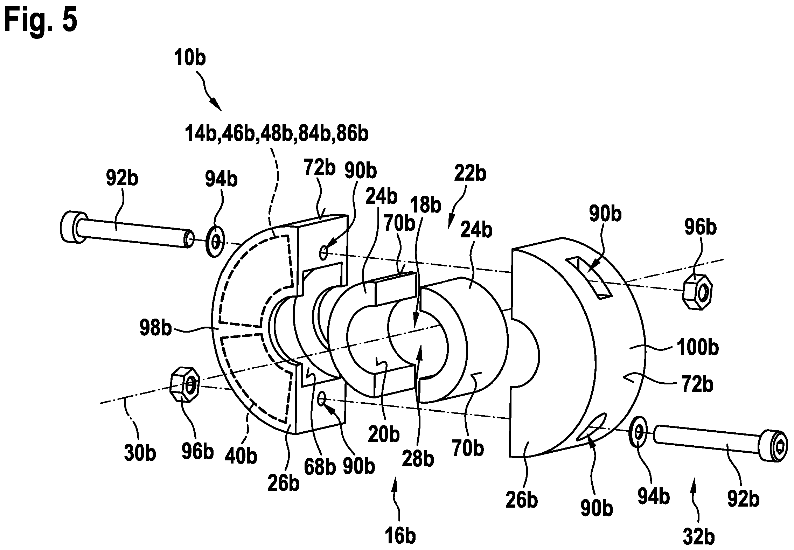

In den Figuren 5 bis 8 sind weitere Ausführungsbeispiele der Erfindung gezeigt. Die nachfolgenden Beschreibungen und die Zeichnungen beschränken sich im Wesentlichen auf die Unterschiede zwischen den Ausführungsbeispielen, wobei bezüglich gleich bezeichneter Bauteile, insbesondere in Bezug auf Bauteile mit gleichen Bezugszeichen, grundsätzlich auch auf die Zeichnungen und/oder die Beschreibung der anderen Ausführungsbeispiele, insbesondere der Figuren 1 bis 4, verwiesen werden kann. Zur Unterscheidung der Ausführungsbeispiele ist der Buchstabe a den Bezugszeichen des Ausführungsbeispiels in den Figuren 1 bis 4 nachgestellt. In den Ausführungsbeispielen der Figuren 5 bis 8 ist der Buchstabe a durch die Buchstaben b bis e ersetzt.

Figur 5 zeigt ein Elektronikmodul 10b für ein Einsatzwerkzeug. Das Einsatzwerkzeug ist beispielsweise als Bohrer, Meißel oder dergleichen ausgebildet. Das Elektronikmodul 10b umfasst zumindest eine Elektronikvorrichtung 14b zu einem Verarbeiten und/oder Erfassen von einsatzwerkzeugspezifischen Kenngrößen.

Das Elektronikmodul 10b umfasst zumindest eine Haltevorrichtung 16b zu einer lösbaren Halterung der Elektronikvorrichtung 14b an dem Einsatzwerkzeug. Die Haltevorrichtung 16b umfasst zumindest eine Einsatzwerkzeugschnittstelle 18b. Die Einsatzwerkzeugschnittstelle 18b weist zumindest eine Kontaktfläche 20b auf, die in einem an dem Einsatzwerkzeug angeordneten Zustand der Haltevorrichtung 16b in, insbesondere direktem, Kontakt mit dem Einsatzwerkzeug ist. Das Elektronikmodul 10b umfasst zumindest eine Dämpfungseinheit 22b zu einem Dämpfen von auf die Elektronikvorrichtung 14b einwirkenden Schwingungen. Die Dämpfungseinheit 22b bildet zumindest teilweise die Einsatzwerkzeugschnittstelle 18b.

Die Dämpfungseinheit 22b umfasst zwei kreissegmentartig ausgebildete Dämpfungselemente 24b, die insbesondere aus einem Elastomer, insbesondere aus Gummi, gebildet sind. Gemeinsam weisen die zwei Dämpfungselemente 24b zumindest in einem Betriebszustand einen Querschnitt auf, der einem ganzen Kreisring entspricht. Ein Gehäuse 26b ist zweiteilig ausgebildet. Die Haltevorrichtung 16b umfasst zumindest eine Halteeinheit 32b, die als Schraubverbindung ausgebildet ist. Das Gehäuse 26b umfasst mehrere Schraubenaufnahmen 90b. Die Halteeinheit 32b umfasst zwei Schrauben 92b, zwei Muttern 96b und zwei Unterlegscheiben 94b. Die Schraubenaufnahmen 90b sind dazu vorgesehen, die Schrauben 92b zumindest zu einer Befestigung der Haltevorrichtung 16b an dem Einsatzwerkzeug 12b aufzunehmen. Die Halteeinheit 32b ist dazu vorgesehen, einen ersten Gehäuseteil 98b und einen zweiten Gehäuseteil 100b des Gehäuses 26b miteinander zu verschrauben, insbesondere zu einer Befestigung des Gehäuses 26b an dem Einsatzwerkzeug.

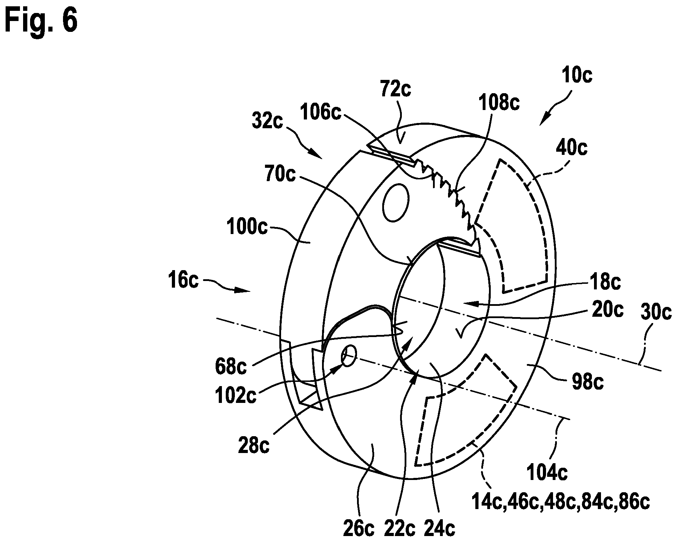

Figur 6 zeigt ein Elektronikmodul 10c für ein Einsatzwerkzeug. Das Einsatzwerkzeug ist beispielsweise als Bohrer, Meißel oder dergleichen ausgebildet. Das Elektronikmodul 10c umfasst zumindest eine Elektronikvorrichtung 14c zu einem Verarbeiten und/oder Erfassen von einsatzwerkzeugspezifischen Kenngrößen. Das Elektronikmodul 10c umfasst zumindest eine Haltevorrichtung 16c zu einer lösbaren Halterung der Elektronikvorrichtung 14c an dem Einsatzwerkzeug. Die Haltevorrichtung 16c umfasst zumindest eine Einsatzwerkzeugschnittstelle 18c. Die Einsatzwerkzeugschnittstelle 18c weist zumindest eine Kontaktfläche 20c auf, die in einem an dem Einsatzwerkzeug angeordneten Zustand der Haltevorrichtung 16c in, insbesondere direktem, Kontakt mit dem Einsatzwerkzeug ist. Das Elektronikmodul 10c umfasst zumindest eine Dämpfungseinheit 22c zu einem Dämpfen von auf die Elektronikvorrichtung 14c einwirkenden Schwingungen. Die Dämpfungseinheit 22c bildet zumindest teilweise die Einsatzwerkzeugschnittstelle 18c.

Die Dämpfungseinheit 22c umfasst ein kreissegmentartig ausgebildetes Dämpfungselement 24c, das insbesondere aus einem Elastomer, insbesondere aus Gummi, gebildet ist. Das Dämpfungselement 24c weist zumindest in einem Betriebszustand einen Querschnitt auf, der einem Kreisringsegment entspricht. Ein Gehäuse 26c ist zweiteilig ausgebildet. Ein erster Gehäuseteil 98c und ein zweiter Gehäuseteil 100c des Gehäuses 26c sind über ein Lagerelement 102c relativ zueinander drehbar gelagert, insbesondere um eine Lagerachse 104c des Lagerelements 102c. Eine Mittelachse 30c eines Aufnahmebereichs 28c für das Einsatzwerkzeug verläuft zumindest im Wesentlichen parallel zu der Lagerachse 104c. Die Haltevorrichtung 16c umfasst zumindest eine Halteeinheit 32c, die als Ratschenverbindung ausgebildet ist. Eine Ratschfläche 106c der Halteeinheit 32c ist an dem ersten Gehäuseteil 98c ausgebildet. Eine weitere Ratschfläche 108c ist an dem zweiten Gehäuseteil 100c ausgebildet. Durch ein Zusammenwirken der Ratschfläche 106c mit der weiteren Ratschfläche 108c ist das Gehäuse 26c an dem Einsatzwerkzeug befestigbar.

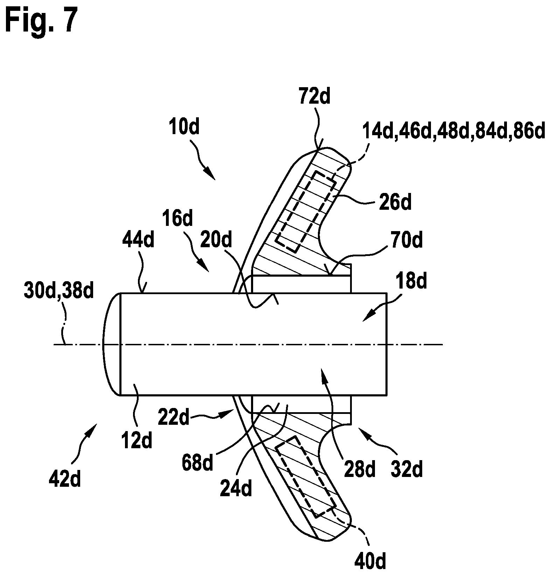

Figur 7 zeigt ein Elektronikmodul 10d für ein Einsatzwerkzeug 12d. Das Einsatzwerkzeug 12d ist beispielsweise als Bohrer, Meißel oder dergleichen ausgebildet. Das Elektronikmodul 10d umfasst zumindest eine Elektronikvorrichtung 14d zu einem Verarbeiten und/oder Erfassen von einsatzwerkzeugspezifischen Kenngrößen. Das Elektronikmodul 10d umfasst zumindest eine Haltevorrichtung 16d zu einer lösbaren Halterung der Elektronikvorrichtung 14d an dem Einsatzwerkzeug 12d. Die Haltevorrichtung 16d umfasst zumindest eine Einsatzwerkzeugschnittstelle 18d. Die Einsatzwerkzeugschnittstelle 18d weist zumindest eine Kontaktfläche 20d auf, die in einem an dem Einsatzwerkzeug 12d angeordneten Zustand der Haltevorrichtung 16d in, insbesondere direktem, Kontakt mit dem Einsatzwerkzeug 12d ist. Das Elektronikmodul 10d umfasst zumindest eine Dämpfungseinheit 22d zu einem Dämpfen von auf die Elektronikvorrichtung 14d einwirkenden Schwingungen. Die Dämpfungseinheit 22d bildet zumindest teilweise die Einsatzwerkzeugschnittstelle 18d.

Die Dämpfungseinheit 22d umfasst ein kreissegmentartig ausgebildetes Dämpfungselement 24d, das insbesondere aus einem Elastomer, insbesondere aus Gummi, gebildet ist. Das Dämpfungselement 24d weist zumindest in einem Betriebszustand einen Querschnitt auf, der einem geschlossenen Kreisring entspricht. Ein Gehäuse 26d ist aus einem elastischen Material gebildet. Die Haltevorrichtung 16d weist eine Halteeinheit 32d auf, die als Klemmkappe ausgebildet ist. Vorzugsweise ist die Halteeinheit 32d durch das aus einem elastischen Material gebildeten Gehäuse 26d gebildet. Durch eine Dehnung des aus einem elastischen Material gebildeten Gehäuses 26d bei einer Anordnung des Gehäuses 26d an dem Einsatzwerkzeug 12d ist eine Haltekraft erzeugbar.

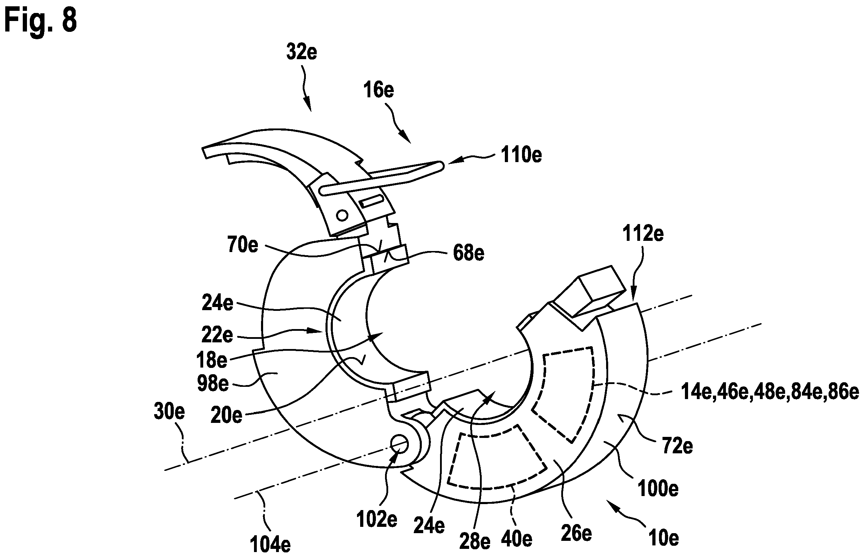

Figur 8 zeigt ein Elektronikmodul 10e für ein Einsatzwerkzeug. Das Einsatzwerkzeug ist beispielsweise als Bohrer, Meißel oder dergleichen ausgebildet. Das Elektronikmodul 10e umfasst zumindest eine Elektronikvorrichtung 14e zu einem Verarbeiten und/oder Erfassen von einsatzwerkzeugspezifischen Kenngrößen. Das Elektronikmodul 10e umfasst zumindest eine Haltevorrichtung 16e zu einer lösbaren Halterung der Elektronikvorrichtung 14e an dem Einsatzwerkzeug. Die Haltevorrichtung 16e umfasst zumindest eine Einsatzwerkzeugschnittstelle 18e. Die Einsatzwerkzeugschnittstelle 18e weist zumindest eine Kontaktfläche 20e auf, die in einem an dem Einsatzwerkzeug angeordneten Zustand der Haltevorrichtung 16e in, insbesondere direktem, Kontakt mit dem Einsatzwerkzeug ist. Das Elektronikmodul 10e umfasst zumindest eine Dämpfungseinheit 22e zu einem Dämpfen von auf die Elektronikvorrichtung 14e einwirkenden Schwingungen. Die Dämpfungseinheit 22e bildet zumindest teilweise die Einsatzwerkzeugschnittstelle 18e.

Die Dämpfungseinheit 22e umfasst zwei kreissegmentartig ausgebildete Dämpfungselemente 24e, die insbesondere aus einem Elastomer, insbesondere aus Gummi, gebildet sind. Gemeinsam weisen die zwei Dämpfungselemente 24e zumindest in einem Betriebszustand einen Querschnitt auf, der einem ganzen Kreisring entspricht. Ein Gehäuse 26e ist zweiteilig ausgebildet. Ein erster Gehäuseteil 98e und ein zweiter Gehäuseteil 100e des Gehäuses 26e sind über ein Lagerelement 102e relativ zueinander drehbar gelagert, insbesondere um eine Lagerachse 104e des Lagerelements 102e. Eine Mittelachse 30e eines Aufnahmebereichs 28e für das Einsatzwerkzeug verläuft zumindest im Wesentlichen parallel zu der Lagerachse 104e. Die Haltevorrichtung 16e umfasst zumindest eine Halteeinheit 32e, die als Bügelverschluss ausgebildet ist. Die Halteeinheit 32e umfasst zumindest einen Verschlussbügel 110e, der an dem ersten Gehäuseteil 98e angeordnet ist. Die Halteeinheit 32 umfasst zumindest eine Verschlussbügelaufnahme 112e, die an dem zweiten Gehäuseteil 100e ausgebildet ist. Der Verschlussbügel 110e ist dazu vorgesehen, insbesondere zu einer Befestigung des Gehäuses 26e an dem Einsatzwerkzeug, mit der Verschlussbügelaufnahme 112e zusammenzuwirken.

## Patentansprüche

1. Elektronikmodul (10a-e) für ein Einsatzwerkzeug (12a-e), insbesondere einen Bohrer oder einen Meißel, mit zumindest einer Elektronikvorrichtung (14a-e) zu einem Verarbeiten und/oder Erfassen von einsatzwerkzeugspezifischen Kenngrößen, mit zumindest einer Haltevorrichtung (16a-e) zu einer lösbaren Halterung der Elektronikvorrichtung (14a-e) an dem Einsatzwerkzeug (12a-e), wobei die Haltevorrichtung (16a-e) zumindest eine Einsatzwerkzeugschnittstelle (18a-18e) umfasst, die zumindest eine Kontaktfläche (20a-e) aufweist, die in einem an dem Einsatzwerkzeug (12a-e) angeordneten Zustand der Haltevorrichtung (16a-e) in, insbesondere direktem, Kontakt mit dem Einsatzwerkzeug (12a-e) ist, und mit zumindest einer Dämpfungseinheit (22a-e) zu einem Dämpfen von auf die Elektronikvorrichtung (14a-e) einwirkenden Schwingungen, wobei die Dämpfungseinheit (22a-e) zumindest teilweise die Einsatzwerkzeugschnittstelle (18a-e) bildet, **dadurch gekennzeichnet, dass** die Haltevorrichtung (16a; 16c-e) zumindest eine Halteeinheit (32a; 32c-e) umfasst, die zum werkzeuglosen Befestigen und/oder Lösen des Einsatzwerkzeugs (12a; 12c-e) an/von der Einsatzwerkzeugschnittstelle (18a; 18c-e) in einem durch die Dämpfungseinheit (22a; 22c-e) zumindest teilweise begrenzten Aufnahmebereich (28a; 28c-e) für das Einsatzwerkzeug (12a; 12c-e) vorgesehen ist.

2. Elektronikmodul (10a-e) nach Anspruch 1, **dadurch gekennzeichnet, dass** die Dämpfungseinheit (22a-e) zumindest ein Dämpfungselement (24a-e) aufweist, das zumindest eine kreisringsegmentartige Ausgestaltung aufweist und die Kontaktfläche (20a-e) der Einsatzwerkzeugschnittstelle (18a-e) bildet.

3. Elektronikmodul (10a-e) nach Anspruch 1 oder 2, **dadurch gekennzeichnet, dass** die Haltevorrichtung (16a-e) ein Gehäuse (26a-e) umfasst, in dem die Elektronikvorrichtung (14a-e) angeordnet ist, wobei die Dämpfungseinheit (22a-e), insbesondere zumindest ein die Kontaktfläche (20a-e) der Einsatzwerkzeugschnittstelle (18a-e) bildendes Dämpfungselement (24a-e) der Dämpfungseinheit (22a-e), in einem an dem Einsatzwerkzeug (12a-e) angeordneten Zustand der Haltevorrichtung (16a-e) an einer dem Einsatzwerkzeug (12a-e) zugewandten Seite des Gehäuses (26a-e) angeordnet ist.

4. Elektronikmodul (10a-e) nach einem der vorhergehenden Ansprüche, **dadurch gekennzeichnet, dass** die Einsatzwerkzeugschnittstelle (18a-e), insbesondere die Dämpfungseinheit (22a-e), einen Aufnahmebereich (28a-e) für das Einsatzwerkzeug (12a-e) zumindest teilweise umgibt, wobei die Haltevorrichtung (16a-e) und die Dämpfungseinheit (22a-e) zumindest in einem Betriebszustand einen gemeinsamen Massenschwerpunkt aufweisen und/oder eine Mittelachse (30a-e) des Aufnahmebereichs (28a-e) einen Massenschwerpunkt der Haltevorrichtung (16a-e) und der Dämpfungseinheit (22a-e) schneidet, zumindest betrachtet in einer zur Mittelachse (30a-e) senkrecht verlaufenden Ebene.

5. Elektronikmodul (10a-e) nach einem der vorhergehenden Ansprüche, **dadurch gekennzeichnet, dass** die Haltevorrichtung (16a) zumindest eine als Bajonettverschluss ausgebildete Halteeinheit (32a) umfasst, die zu einem lösbaren Befestigen des Einsatzwerkzeugs (12a) an der Einsatzwerkzeugschnittstelle (18a) in einem durch die Dämpfungseinheit (22a) zumindest teilweise begrenzten Aufnahmebereich (28a) für das Einsatzwerkzeug (12a) vorgesehen ist.

6. Elektronikmodul (10a-e) nach Anspruch 5, **dadurch gekennzeichnet, dass** der Bajonettverschluss zumindest einen metallischen Verschlussring (34a) umfasst.

7. Elektronikmodul (10a-e) nach einem der vorhergehenden Ansprüche, **dadurch gekennzeichnet, dass** die Dämpfungseinheit (22a) zumindest ein als Schrumpfschlauch ausgebildetes Dämpfungselement (24a) umfasst.

8. Elektronikmodul (10a-e) nach einem der vorhergehenden Ansprüche, **dadurch gekennzeichnet, dass** die Dämpfungseinheit (22a) zumindest ein als O-Ring ausgebildetes Dämpfungselement (36a) umfasst.

9. Elektronikmodul (10a-e) nach einem der vorhergehenden Ansprüche, **dadurch gekennzeichnet, dass** die Dämpfungseinheit (22a-e) derart die Einsatzwerkzeugschnittstelle (18a-e) ausbildet, dass die Dämpfungseinheit (22a-e) in einem an der Einsatzwerkzeugschnittstelle (18a-e) angeordneten Zustand des Einsatzwerkzeugs (12a-e) zumindest zur Dämpfung von auf die Elektronikvorrichtung (14a-e) wirkenden Schwingungen vorgesehen ist, die durch entlang einer Längsachse (38a-e), insbesondere Rotationsachse, des Einsatzwerkzeugs (12a-e) wirkende Stöße oder Schläge des Einsatzwerkzeugs (12a-e) hervorrufbar sind.

10. Einsatzwerkzeugsystem (42a-e) mit zumindest einem Einsatzwerkzeug (12a-e) und mit zumindest einem Elektronikmodul (10a-e) nach einem der vorhergehenden Ansprüche.

11. Einsatzwerkzeugsystem (42a-e) nach Anspruch 10, **dadurch gekennzeichnet, dass** die Dämpfungseinheit (22a-e) in einem an dem Einsatzwerkzeug (12a-e) angeordneten Zustand des Elektronikmoduls (10a-e) unmittelbar an dem Einsatzwerkzeug (12a-e), insbesondere an einer Außenfläche (44a-e) des Einsatzwerkzeugs (12a-e), anliegt.

12. Einsatzwerkzeugsystem (42a-e) nach Anspruch 10 oder 11, **dadurch gekennzeichnet, dass** das Einsatzwerkzeug (12a-e) zumindest in einem an dem Einsatzwerkzeug (12a-e) angeordneten Zustand des Elektronikmoduls (10a-e), zumindest betrachtet entlang einer Umfangsrichtung des Einsatzwerkzeugs (12a-e), zumindest im Wesentlichen vollständig von der Dämpfungseinheit (22a-e) und der Haltevorrichtung (16a-e) umschlossen ist.

## Claims

1. Electronic module (10a-e) for an insert tool (12a-c), in particular a drill bit or a chisel, comprising at least one electronic device (14a-e) for processing and/or sensing insert-tool-specific characteristics, comprising at least one holding device (16a-e) for releasably holding the electronic device (14a-e) on the insert tool (12a-e), the holding device (16a-e) having at least one insert-tool interface (18a-18e) having at least one contact surface (20a-e) that, when the holding device (16a-e) has been arranged on the insert tool (12a-e), is in contact, in particular in direct contact, with the insert tool (12a-e), and comprising at least one damping unit (22a-e) for damping vibrations acting on the electronic device (14a-e), the damping unit (22a-e) at least partially constituting the insert-tool interface (18a-c), **characterized in that** the holding device (16a; 16c-e) comprises at least one holding unit (32a; 32c-e), which is designed for attaching and/or detaching the insert tool (12a; 12c-e) to/from the insert-tool interface (18a; 18c-e) without use of tools, in a receiving region (28a; 28c-e) for the insert tool (12a; 12c-e) that is at least partially delimited by the damping unit (22a; 22c-e).

2. Electronic module (10a-e) according to Claim 1, **characterized in that** the damping unit (22a-e) has at least one damping element (24a-e), which at least is designed in the manner of a circular ring segment and constitutes the contact surface (20a-e) of the insert-tool interface (18a-e).

3. Electronic module (10a-e) according to Claim 1 or 2, **characterized in that** the holding device (16a-e) comprises a housing (26a-e), in which the electronic device (14a-e) is arranged, the damping unit (22a-e), in particular at least one damping element (24a-e) of the damping unit (22a-e), constituting the contact surface (20a-e) of the insert-tool interface (18a-e), being arranged on a side of the housing (26a-e) that faces toward the insert tool (12a-e) when the holding device (16a-e) has been arranged on the insert tool (12a-e).

4. Electronic module (10a-e) according to any one of the preceding claims, **characterized in that** the insert-tool interface (18a-e), in particular the damping unit (22a-e), at least partially surrounds a receiving region (28a-e) for the insert tool (12a-e), the holding device (16a-e) and the damping unit (22a-e), at least in an operating state, having a common centre of mass, and/or a central axis (30a-e) of the receiving region (28a-e) intersecting a centre of mass of the holding device (16a-e) and of the damping unit (22a-e), at least as viewed in a plane perpendicular to the central axis (30a-e).

5. Electronic module (10a-e) according to any one of the preceding claims, **characterized in that** the holding device (16a) comprises at least one holding unit (32a) realized as a bayonet lock, which is designed for releasably attaching the insert tool (12a) to the insert-tool interface (18a) in a receiving region (28a) for the insert tool (12a) that is at least partially delimited by the damping unit (22a).

6. Electronic module (10a-e) according to Claim 5, **characterized in that** the bayonet lock comprises at least one metallic locking ring (34a).

7. Electronic module (10a-e) according to any one of the preceding claims, **characterized in that** the damping unit (22a) comprises at least one damping element (24a) realized as a shrink-on sleeve.

8. Electronic module (10a-e) according to any one of the preceding claims, **characterized in that** the damping unit (22a) comprises at least one damping element (36a) realized as an O-ring.

9. Electronic module (10a-e) according to any one of the preceding claims, **characterized in that** the damping unit (22a-e) realizes the insert-tool interface (18a-e) in such a manner that the damping unit (22a-e), when the insert tool (12a-e) has been arranged at the insert-tool interface (18a-e), is designed at least to damp vibrations, acting on the electronic device (14a-e), that can be caused by impacts or shocks of the insert tool (12a-e) acting along a longitudinal axis (38a-e), in particular axis of rotation, of the insert tool (12a-e).

10. Insert tool system (42a-e) comprising at least one insert tool (12a-e) and comprising at least one electronic module (10a-e) according to any one of the preceding claims.

11. Insert tool system (42a-e) according to Claim 10, **characterized in that** the damping unit (22a-e), when the electronic module (10a-e) has been arranged on the insert tool (12a-e), bears directly against the insert tool (12a-e), in particular against an external surface (44a-e) of the insert tool (12a-e).

12. Insert tool system (42a-e) according to Claim 10 or 11, **characterized in that** the insert tool (12a-e), at least when the electronic module (10a-e) has been arranged on the insert tool (12a-e), is at least substantially completely enclosed by the damping unit (22a-e) and the holding device (16a-e), at least as viewed along a circumferential direction of the insert tool (12a-e).

## Revendications

1. Module électronique (10a-e) pour un outil d'insertion (12a-e), en particulier un foret ou un burin, comprenant au moins un dispositif électronique (14a-e) pour un traitement et/ou une détection de grandeurs caractéristiques spécifiques à l'outil d'insertion, comprenant au moins un dispositif de maintien (16a-e) pour maintenir de manière amovible le dispositif électronique (14a-e) sur l'outil d'insertion (12a-e), le dispositif de maintien (16a-e) comprenant au moins une interface d'outil d'insertion (18a-18e) qui présente au moins une surface de contact (20a-e) qui, dans un état du dispositif de maintien (16a-e) disposé sur l'outil d'insertion (12a-e) est en contact, notamment direct, avec l'outil d'insertion (12a-e), et avec au moins une unité d'amortissement (22a-e) pour amortir les vibrations agissant sur le dispositif électronique (14a-e), l'unité d'amortissement (22a-e) formant au moins partiellement l'interface d'outil d'insertion (18a-e), **caractérisé en ce que** le dispositif de maintien (16a ; 16ce) comprend au moins une unité de maintien (32a ; 32c-e) prévue pour fixer et/ou libérer sans outil l'outil d'insertion (12a ; 12c-e) sur/depuis l'interface d'outil d'insertion (18a ; 18c-e) dans une zone de réception (28a ; 28c-e) pour l'outil d'insertion (12a ; 12c-e), qui est délimitée au moins partiellement par l'unité d'amortissement (22a ; 22c-e).

2. Module électronique (10a-e) selon la revendication 1, **caractérisé en ce que** l'unité d'amortissement (22a-e) présente au moins un élément d'amortissement (24a-e) qui présente au moins une configuration en segment d'anneau circulaire et forme la surface de contact (20a-e) de l'interface d'outil d'insertion (18a-e).

3. Module électronique (10a-e) selon la revendication 1 ou 2, **caractérisé en ce que** le dispositif de maintien (16a-e) présente un boîtier (26a-e) dans lequel est disposé le dispositif électronique (14a-e), l'unité d'amortissement (22a-e), en particulier au moins un élément d'amortissement (24a-e) de l'unité d'amortissement (22a-e) formant la surface de contact (20a-e) de l'interface d'outil d'insertion (18a-e), dans un état du dispositif de maintien (16a-e) disposé sur l'outil d'insertion (12a-e), étant disposé sur un côté du boîtier (26a-e) tourné vers l'outil d'insertion (12a-e).

4. Module électronique (10a-e) selon l'une des revendications précédentes, **caractérisé en ce que** l'interface d'outil d'insertion (18a-e), en particulier l'unité d'amortissement (22a-e), entoure au moins partiellement une zone de réception (28a-e) pour l'outil d'insertion (12a-e), le dispositif de maintien (16a-e) et l'unité d'amortissement (22a-e) présentant un centre de gravité commun au moins dans un état de fonctionnement et/ou un axe central (30a-e) de la zone de réception (28a-e) coupant un centre de gravité du dispositif de maintien (16a-e) et de l'unité d'amortissement (22a-e), au moins vu dans un plan perpendiculaire à l'axe central (30a-e).

5. Module électronique (10a-e) selon l'une des revendications précédentes, **caractérisé en ce que** le dispositif de maintien (16a) comprend au moins une unité de maintien (32a) réalisée sous forme de fermeture à baïonnette, qui est prévue pour fixer de manière amovible l'outil d'insertion (12a) sur l'interface d'outil d'insertion (18a) dans une zone de réception (28a) pour l'outil d'insertion (12a) délimitée au moins partiellement par l'unité d'amortissement (22a).

6. Module électronique (10a-e) selon la revendication 5, **caractérisé en ce que** la fermeture à baïonnette comprend au moins un anneau de fermeture métallique (34a).

7. Module électronique (10a-e) selon l'une des revendications précédentes, **caractérisé en ce que** l'unité d'amortissement (22a) comprend au moins un élément d'amortissement (24a) sous la forme d'un tube rétractable.

8. Module électronique (10a-e) selon l'une des revendications précédentes, **caractérisé en ce que** l'unité d'amortissement (22a) comprend au moins un élément d'amortissement (36a) sous la forme d'un joint torique.

9. Module électronique (10a-e) selon l'une des revendications précédentes, **caractérisé en ce que** l'unité d'amortissement (22a-e) forme l'interface d'outil d'insertion (18a-e) de telle sorte que dans un état de l'outil d'insertion (12a-e) disposé au niveau de l'interface d'outil d'insertion (18a-e), l'unité d'amortissement (22a-e) est prévue au moins pour amortir les vibrations agissant sur le dispositif électronique (14a-e), lesquelles vibrations peuvent être provoquées par des chocs ou des impacts de l'outil d'insertion (12a-e) agissant le long d'un axe longitudinal (38a-e), en particulier d'un axe de rotation, de l'outil d'insertion (12a-e).

10. Système d'outil d'insertion (42a-e) comprenant au moins un outil d'insertion (12a-e) et au moins un module électronique (10a-e) selon l'une des revendications précédentes.

11. Système d'outil d'insertion (42a-e) selon la revendication 10, **caractérisé en ce que** dans un état du module électronique (10a-e) disposé sur l'outil d'insertion (12a-e), l'unité d'amortissement (22a-e) s'applique directement sur l'outil d'insertion (12a-e), en particulier sur une surface extérieure (44a-e) de l'outil d'insertion (12a-e).

12. Système d'outil d'insertion (42a-e) selon la revendication 10 ou 11, **caractérisé en ce que** l'outil d'insertion (12a-e) est entouré au moins sensiblement complètement par l'unité d'amortissement (22a-e) et le dispositif de maintien (16a-e) au moins dans un état du module électronique (10a-e) disposé sur l'outil d'insertion (12a-e), vu dans une direction périphérique de l'outil d'insertion (12a-e).
